# EUROPEAN PATENT APPLICATION

(11) **EP 4 262 271 A2**
(43) Date of publication of application: **18.10.2023**
(21) Application number: 23195636.8
(22) Date of filing: 27.06.2017
(51) Int. Cl.: H04W 28/02

(54) **CONFIGURATION OF DISCONTINUOUS RECEPTION (DRX) PARAMETERS IN LIGHT CONNECTION**

(30) Priority: 30.09.2016 US 201662402847 P
(62) Divisional of application: 17737965.8
(71) Applicant: Apple Inc., Cupertino, CA 95014 (US)
(72) Inventor: The designation of the inventor has not yet been filed
(74) Representative: Lang, Johannes

(57) **Abstract**

Described is an apparatus. The apparatus may comprise a first circuitry and a second circuitry. The first circuitry may be operable to generate one or more parameters associated with a Discontinuous Reception (DRX) paging cycle of the UE, and store the one or more parameters in a memory. The second circuitry may be operable to generate a message for transmission to the UE such that the message comprises the one or more parameters associated with the DRX paging cycle of the UE.

## Description

### CLAIM OF PRIORITY

The present application claims priority under 35 U.S.C. § 119(e) to United States Provisional Patent Application Serial Number 62/402,847, filed September 30, 2016 and entitled "CONFIGURATION OF DISCONTINUOUS RECEPTION (DRX) IN LIGHT CONNECTION," which is herein incorporated by reference in its entirety.

### BACKGROUND

In Long Term Evolution (LTE) networks, mobile applications and their corresponding higher data rate requirements are the latest phenomenon causing a tremendous need in power saving for mobile devices. Discontinuous Reception (DRX) is a method by which a User Equipment (UE) can switch off its receiver for a period of time, thus saving energy, while remaining in the Radio Resource Control (RRC) Connected state (or mode). DRX in connected mode is a power saving mechanism in LTE networks. Thus, DRX saves battery power of the UE, usually at the expense of potential increase in latency.

### BRIEF DESCRIPTION OF THE DRAWINGS

The embodiments of the disclosure will be understood more fully from the detailed description given below and from the accompanying drawings of various embodiments of the disclosure. However, while the drawings are to aid in explanation and understanding, they are only an aid, and should not be taken to limit the disclosure to the specific embodiments depicted therein.
**Fig. 1A** illustrates a portion of an end-to-end network architecture of an LTE network with various components of the network to provide RAN configured DRX parameters for light connection state of operation of an UE, according to some embodiments of the disclosure.
**Fig. 1B** illustrates a scenario of an eNB and a plurality of UEs, according to some embodiments.
**Fig. 2A** illustrates a first example format of RAN configured DRX parameters and PTW length for eDRX, according to some embodiments.
**Fig. 2B** illustrates a second example format of RAN configured DRX parameters, according to some embodiments.
**Fig. 3** illustrates transmission of RAN configured DRX parameters via a MAC-MainConfig Information Element (IE) of a RRC Connection Reconfiguration message, according to some embodiments.
**Fig. 4A** illustrates transmission of RAN configured DRX parameters via an IE associated with a RRC Connection Release message, according to some embodiments.
**Fig. 4B** illustrates transmission of RAN configured DRX parameters via another IE associated with a RRC Connection Release message, according to some embodiments.
**Fig. 5A** illustrates transmission of RAN configured DRX parameters via an IE associated with a RRC Connection Reject message, according to some embodiments.
**Fig. 5B** illustrates transmission of RAN configured DRX parameters via another IE of a RRC Connection Reject message, according to some embodiments.
**Fig. 6** illustrates transmission of RAN configured DRX parameters via broadcast signaling with a Radio Resource Configuration Common message or a Radio Resource Configuration Common SIB (System Information Block) message (e.g., SIB2), according to some embodiments.
**Fig. 7** illustrates an IE of a UE-EUTRA-Capability message, where the IE may indicate whether a UE may support RAN configured DRX cycle and/or RAN configured PTW length, according to some embodiments.
**Fig. 8** illustrates an eNB and a UE, in accordance with some embodiments of the disclosure.
**Fig. 9** illustrates hardware processing circuitries for an eNB that may generate eNB configured DRX parameters for a light connection state of a UE, according to some embodiments.
**Fig. 10** illustrates hardware processing circuitries for a UE for operating in a light connection state in accordance with RAN configured DRX parameters, according to some embodiments.
**Fig. 11** illustrates a method for generating a message comprising RAN configured DRX parameters for light connection state of operation of an UE, according to some embodiments.
**Fig. 12** illustrates a method for operating in a light connection state based on RAN configured DRX parameters, in accordance with some embodiments of the disclosure.
**Fig. 13** illustrates an architecture of a system of a network, according to some embodiments.
**Fig. 14** illustrates example components of a device, according to some embodiments.
**Fig. 15** illustrates example interfaces of baseband circuitry, according to some embodiments.

### DETAILED DESCRIPTION

In an example, in LTE networks, default DRX value and default parameter nB may be broadcast to multiple UEs via, for example, SIB2 (System Information Block 2) message, and the multiple UEs may operate in an idle state based on the default DRX value and default parameter nB. A UE may also request a UE specific DRX value to a Mobility Management Entity (MME) of a core network during, for example, an initial attach procedure. The default or UE specific DRX value and the nB parameter may be used to determine UE wake up schedules during an idle state of operation of the UE.

In some embodiments, Radio Access Network (RAN) (e.g., a eNB) may configure DRX parameters (e.g., UE specific DRX value and/or the parameter nB). If a UE is to operate in an extended DRX (eDRX) cycle, then a RAN based PTW length may also be configured by the eNB. In some embodiments, the eNB may transmit the DRX parameters (e.g., UE specific DRX value, default DRX value, the parameter nB, PTW length for eDRX, etc.) via dedicated signaling (e.g., via RRC Connection Reconfiguration message, RRC Connection Release message, RRC Connection Reject message, etc.). In some embodiments, the eNB may transmit the DRX parameters via broadcast signaling (e.g., via SIB2 message). Such DRX parameters may be RAN configured DRX parameters, as the RAN or the eNB (and not the MME) may configure these parameters.

In some embodiments, the RAN configured DRX parameters may be for a light connection state of a UE. For example, the UE may operate in accordance with the DRX parameters, e.g., while the UE is in the light connection state.

In some embodiments, a eNB may transmit an inter-eNB backhaul message, e.g., using X2AP (X2 Application Protocol), to a neighboring eNB, where the inter-eNB backhaul message may include one or more parameters associated with the eDRX cycle (e.g., eDRX cycle, PTW length, etc.).

In the following description, numerous details are discussed to provide a more thorough explanation of embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct electrical, mechanical, or magnetic connection between the things that are connected, without any intermediary devices. The term "coupled" means either a direct electrical, mechanical, or magnetic connection between the things that are connected or an indirect connection through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The terms "substantially," "close," "approximately," "near," and "about" generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking, or in any other manner.

It is to be understood that the terms so used are interchangeable under appropriate circumstances such that the embodiments of the invention described herein are, for example, capable of operation in other orientations than those illustrated or otherwise described herein.

The terms "left," "right," "front," "back," "top," "bottom," "over," "under," and the like in the description and in the claims, if any, are used for descriptive purposes and not necessarily for describing permanent relative positions.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

In addition, for purposes of the present disclosure, the term "eNB" may refer to a legacy eNB, a next-generation or 5G eNB, an Access Point (AP), a Base Station or an eNB communicating on the unlicensed spectrum, and/or another base station for a wireless communication system. For purposes of the present disclosure, the term "UE" may refer to a legacy UE, a next-generation or 5G UE, an STA, and/or another mobile equipment for a wireless communication system.

Various embodiments of eNBs and/or UEs discussed below may process one or more transmissions of various types. Some processing of a transmission may comprise receiving, encoding, decoding, and/or otherwise handling a transmission that has been received. In some embodiments, an eNB or UE processing a transmission may determine or recognize the transmission's type and/or a condition associated with the transmission. For some embodiments, an eNB or UE processing a transmission may act in accordance with the transmission's type, and/or may act conditionally based upon the transmission's type. An eNB or UE processing a transmission may also recognize one or more values or fields of data carried by the transmission. Processing a transmission may comprise moving the transmission through one or more layers of a protocol stack (which may be implemented in, e.g., hardware and/or software-configured elements), such as by moving a transmission that has been received by an eNB or a UE through one or more layers of a protocol stack.

Various embodiments of eNBs and/or UEs discussed below may also generate one or more transmissions of various types. Some generating of a transmission may comprise receiving, encoding, decoding, and/or otherwise handling a transmission that is to be transmitted. In some embodiments, an eNB or UE generating a transmission may establish the transmission's type and/or a condition associated with the transmission. For some embodiments, an eNB or UE generating a transmission may act in accordance with the transmission's type, and/or may act conditionally based upon the transmission's type. An eNB or UE generating a transmission may also determine one or more values or fields of data carried by the transmission. Generating a transmission may comprise moving the transmission through one or more layers of a protocol stack (which may be implemented in, e.g., hardware and/or software-configured elements), such as by moving a transmission to be sent by an eNB or a UE through one or more layers of a protocol stack.

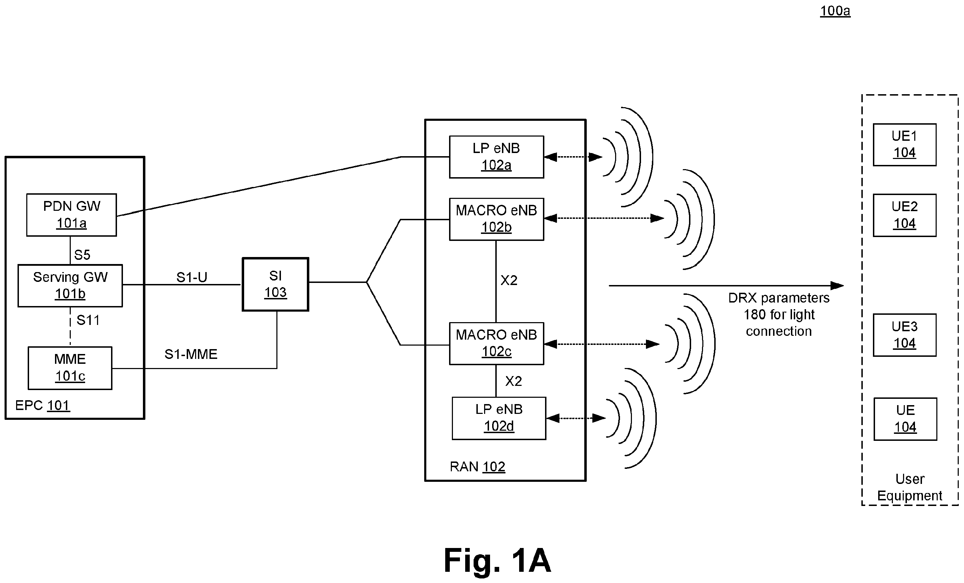

**Fig. 1A** illustrates a portion of an end-to-end network architecture 100 of an LTE network with various components of the network to provide RAN configured DRX parameters for light connection state of operation of an UE, according to some embodiments of the disclosure.

In some embodiments, network 100 may comprise core network 101, RAN 102, and Interface 103.

An example of core network 101 may be an Evolved Packet Core (EPC), also referred to as System Architecture Evolution (SAE) core. An example of RAN 102 may be Evolved Universal Mobile Telecommunications System (UMTS) Terrestrial Radio Access Network (E-UTRAN). An example of interface 103 may be an SI interface. So as not to obscure the various embodiments, only a section of core network 101, as well as RAN 102, is illustrated. Core network 101 may include Packet Data Network Gateway (PDN GW) 101a, Serving Gateway (serving GW, or SGW) 101b, and Mobility Management Entity (MME) 101c. The interface between PDN GW 101a and SGW 101b may be S5. The interface between SGW 101b and MME 101c may be S11.

PDN GW 101a (which is also referred to here as PGW) may terminate a SGi interface toward the packet data network (PDN). PDN GW 101a may route data packets between EPC 101 and the external PDN (not shown), and may be a key node for policy enforcement and charging data collection. It may also provide an anchor point for mobility with non-LTE network accesses. The external PDN can be any kind of Internet Protocol (IP) network, as well as an IP Multimedia Subsystem (IMS) domain. In some embodiments, PDN GW 101a and Serving GW 101b may be realized in one physical node. In some embodiments, PDN GW 101a and Serving GW 101b may be realized into separate physical nodes.

Serving GW 101b (which is also referred to here as SGW) may terminate the interface toward RAN 102. In addition, SGW 101b may route data packets between RAN 102 and core network 101. SGW 101b may be a local anchor point for handovers between the eNBs.

MME 101c may be similar in function to the control plane of legacy Serving General Packet Radio Service (GPRS) Support Nodes (SGSN). MME 101c may manage mobility aspects in access such as gateway selection and tracking area list management. SGW 101b and MME 101c may be realized in one physical node or also in separate physical nodes.

RAN 102 (which is also referred here as E-UTRAN 102) may include Enhanced/Evolved Node B's (abbreviated as eNodeB or eNB) 102alb/c/d (which may function as base stations) for communicating with one or more UEs 104. eNBs 102alb/c/d (generally also referred to as eNB 102) may comprise of MACRO eNBs 102b/c and Low Power (LP) eNBs 102ald. An eNB 102 may be an element in E-UTRA of the LTE standard that is the evolution of the element Node B in UMTS Terrestrial Radio Access (UTRA) of UMTS. UMTS is a third generation mobile cellular system for networks based on the Global System for Mobile Communications (GSM) standard. It is the hardware that is connected to the mobile phone network that communicates directly with the UEs, like a Base Transceiver Station (BTS) in GSM networks. Traditionally, a Node B has minimum functionality, and is controlled by a Radio Network Controller (RNC). However, with eNB 102a, for example, there may not be separate controller element.

An eNB may interface with the SAE core (also known as the EPC) and other eNBs. For example, eNB 102b may use the S1-AP protocol on the S1-MME interface with MME 101c for control plane traffic. An eNB may also use the GPRS Tunneling Protocol (GTP-U), which is the defining IP-based protocol of the GPRS core network protocol on the S1-U interface with the SGW for user plane traffic. Collectively, the S1-MME and S1-U interfaces may be known as the S1 interface 103, which may represent the interface from eNB 102b/c to EPC 101.

eNBs (e.g., MACRO 102b/c and LP 102a/d) may conclude the air interface protocol. eNBs may be the first point of contact for a UE 104. In some embodiments, an eNB may perform various logical roles for RAN 102 including RNC functions such as data packet scheduling, mobility management, radio bearer management, and uplink and downlink dynamic radio resource management. An embodiment of eNB 102alb/c/d is described with reference to subsequent figure(s) herein later.

Referring back to **Fig. 1A****,** in some embodiments, UEs 104 may be arranged to communicate Orthogonal Frequency-Division Multiplexing (OFDM) communication signals with eNB 102alb/c/d over a multicarrier communication channel according to an OFDM communication technique. The OFDM signals may include a myriad of orthogonal subcarriers. OFDM is a method of encoding digital data on multiple carrier frequencies.

In some embodiments, UE 104 may be any device used directly by an end-user to communicate. It can be a handheld telephone, a laptop computer equipped with a mobile broadband adapter, a cellular phone, a tablet, an Internet of Things (IoT), or any other device. UE 104 may connect to the base station, for example, Node B/eNodeB 102a as specified in the ETSI 125/136-series and 3GPP 25/36-series of specifications. UE 104 may roughly correspond to the mobile station (MS) in GSM systems. Various bearers (i.e., carriers) may be used to provide End-to-End Service from the UE to the Internet, for example. An embodiment of UE 104 is described with reference to subsequent figure(s) herein later.

Referring back to **Fig. 1A****,** in some embodiments, S1 interface 103 is the interface that separates RAN 102 and EPC 101. S1 interface 103 may be split into two parts. The first part, the S1-U may carry traffic data between eNBs 102b/c and SGW 101b. The second part may be the S1-MME, a signaling interface between eNBs 102b/c and the MME 101c. The X2 interface may be the interface between eNBs, for example, eNB 102b and eNB102c. The X2 interface may include two parts, the X2-C and X2-U. The X2-C may be the control plane interface between eNBs 102b/c and the X2-U may be the user plane interface between eNBs 101b/c.

LP cells may be usually used to extend coverage to indoor areas where outdoor signals do not reach well. LP cells may also be used to add network capacity in areas with very heavy phone usage such as airports. The term Low Power eNB refers to any lower power eNB for implementing a narrower cell (i.e., narrower than a macro cell) such as a femtocell, picocell, or micro cell. Femtocell eNBs may be normally provided by a mobile network operator to its residential or commercial customers. A femtocell may be generally the size of a residential gateway. It may connect to the user's broadband line. When the femtocell is plugged in the broadband line, it may connect to the mobile operator's mobile network. The connected femtocell then provides extra coverage, for example, of 30 to 50 meters, for residential femtocells. Therefore, an LP eNB (e.g., 102a/d) may be a femtocell eNB since it is coupled through the PGW 101a.

Likewise, a picocell may be a wireless communication system usually covering a small area, such as corporate offices, shopping areas, or aircrafts, etc. A picocell eNB can couple through the X2 link to another eNB. For example, picocell eNB can couple to a macro eNB through its Base Station Controller (BSC). Therefore, LP eNB (e.g., 102a/d) may be realized with a picocell eNB. Picocell eNBs or other LP eNBs may incorporate some or all features of a macro eNB. In some cases, picocell eNBs or other LP eNBs are referred to as an Access Point (AP) Base Station (BS) or enterprise femtocell.

In some cases, a downlink resource grid may be used for downlink transmissions from an eNB 102alb/c/d to a UE 104. The downlink resource grid may be a time-frequency grid. The time-frequency grid may be a physical resource in the downlink in each slot. Such a time-frequency plane representation may be used for OFDM systems. The time-frequency resource grid may be formed of columns and rows. Each column and each row of the time-frequency resource grid correspond to one OFDM symbol and one OFDM subcarrier, respectively.

In the time domain, the duration of the time-frequency resource grid in the time domain corresponds to one slot in a radio frame. The smallest time-frequency unit in a time-frequency resource grid is designated as a resource element. Each time-frequency resource grid includes a number of resource blocks. The resource blocks describe the mapping of particular physical channels to resource elements. Each resource block includes a collection of resource elements. In the frequency domain, the collection of resource elements may represent the smallest quanta of currently allowable resources. There are many different physical downlink channels which are conveyed via such resource blocks. For example, physical downlink channels can be the Physical Downlink Shared Channel (PDSCH) and the Physical Downlink Control Channel (PDCCH).

The PDSCH may carry user data to UE 104. The PDSCH may also carry higher-layer signaling to a UE 104 (e.g., UE1). The PDCCH may carry resource allocations related to the PDSCH and information about the transport format. The PDCCH may also inform UE 104 about the resource allocation, transport format, and Hybrid Automatic Repeat Request (H-ARQ) information related to the uplink shared channel. Generally, downlink scheduling (i.e., assigning control and shared channel resource blocks to UEs 104 within a cell) may be performed at the eNB (e.g., one or more eNBs 102alb/c/d). This downlink scheduling may be based on channel quality information fed back from the UEs 104 to eNB 102alb/c/d. The downlink resource assignment information may be then sent to a UE 104 (e.g., UE1) on the control channel (e.g., PDCCH) which is used for (or assigned to) UE 104.

To convey the control information, the PDCCH may use Control Channel Elements (CCEs). The PDCCH complex-valued symbols may be first organized into quadruplets before being mapped to resource elements. The quadruplets may be then permuted using a sub-block inter-leaver for rate matching. Each PDCCH may be transmitted using one or more of these CCEs. Each CCE may correspond to nine sets of four physical resource elements. These sets of physical resource elements may be known as Resource Element Groups (REGs). In one example, four Quadrature Phase Shift Keying (QPSK) symbols may be mapped to each REG. Depending on the size of the Downlink Control Information (DCI) and the channel condition, the signal on the PDCCH can be transmitted using one or more CCEs.

In LTE downlink, the eNB (e.g., eNB 102a/d) may periodically transmit one or more synchronization signals and signals carrying system information. Examples of the one or more synchronization signals may be Primary Synchronization Signals (PSS) and Secondary Synchronization Signals (SSS). Examples of signals carrying system information may be Physical Broadcast Channel (PBCH) signals. LTE downlink transmission may contain Common Reference Signals (CRS) in every sub frame even if the sub frames are empty (i.e., when no data is being transmitted).

A UE (e.g., UE 104) may first acquire a Physical Cell Identifier (PCI), frame synchronization information, and time slot to read system information blocks from the eNB. If UE 104 is currently tuned to a specific frequency channel, it may read PSS to synchronize on a sub frame level. The PSS may be periodically transmitted by eNB 102a. So, UE 104 may be synchronized regularly (or periodically) with eNB 102a. UE 104 may then read the SSS which is located in the same sub frame as the PSS. UE 104 may achieve a physical layer cell identity group number from the SSS. The SSS may be periodically transmitted by eNB 102a. So, UE 104 may be regularly (or periodically) synchronized with eNB 102a using the SSS. Once UE 104 knows the PCI for a given cell, it may also know the location of the cell Reference signals such as the CRS. The reference signals may be used in channel estimation, cell selection, cell reselection, and handover procedures.

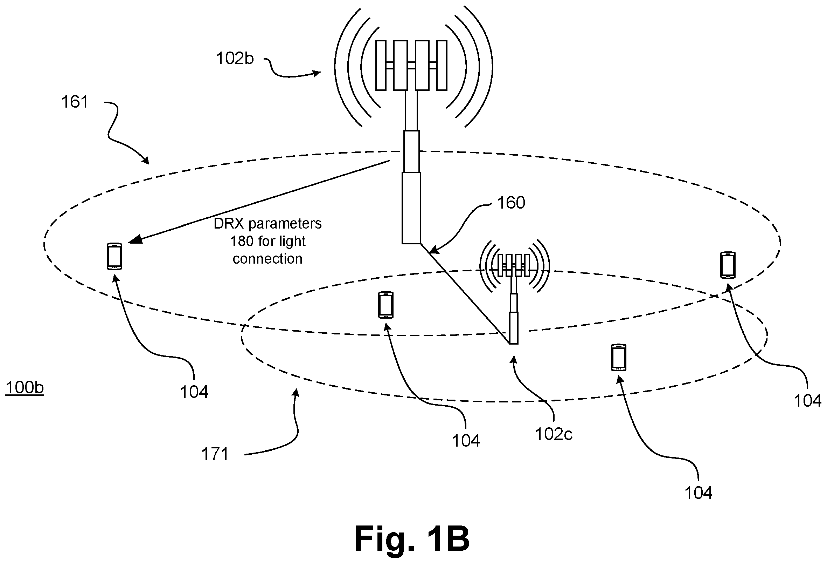

**Fig. 1B** illustrates a scenario of an eNB and a plurality of UEs, according to some embodiments. A wireless cellular communications scenario 100b may comprise a first eNB 102b, a second eNB 102c, and UEs 104 (e.g., as discussed with respect to **Fig. 1A**). First eNB 102b may be operable to provide wireless cellular communications services over a geographic area within a first cell 161, and second eNB 102c may be operable to provide wireless cellular communications services over a geographic area within a second cell 171.

In some embodiments, the eNBs 102b and 102c may communicate via a backhaul channel 160, e.g., using inter-eNB paging message. The inter-eNB paging message may be a X2AP (X2 Application Protocol) based paging message.

Referring to **Figs. 1A-1B****,** in some embodiments, a eNB 102 may transmit DRX parameters 180 to a UE 104. The DRX parameters 180 may be for use during a light connection of UE 104. In some embodiments, the DRX parameters 180 may be configured by RAN 102 (e.g., by eNB 102).

For example, UE 104 may be, at a given time, in an idle state, a connected state, or a light connection state. For example, when the UE 104 is not engaged in active communication with a corresponding eNB 102 for at least a threshold period of time, the UE 104 may enter an idle state. During the idle state, the MME 101c and/or the eNB 102 may not store context information associated with the UE 104.

On the other hand, when the UE 104 is engaged in active communication with the eNB 102, the UE 104 may be in a connected state. During the connected state, the MME 101c and the eNB 102 may store the context information associated with the UE 104.

A light connection state of a UE may, merely as an example, be somewhat between the idle state and the connected state. For example, during the light connection state, the eNB 102 may store the context information associated with the UE 104. The light connection state of the UE 104 may be at least in part transparent to the MME 101c. For example, the eNB 102 may store the context information associated with the UE 104, but may also store an indicator to indicate that the UE 104 is not in an active state (e.g., the indicator may indicate that the UE 104 is in a light connection state). The UE 104 may monitor paging DRX messages. In an example, from the perspective of the MME 101c, the UE 104 may be still in a connected state (e.g., the MME 101c may store the context information of the UE 104). While the UE 104 is in the light connection state, if the eNB 102 is to transmit data to the UE 104, the eNB 102 may transmit a paging message to the UE 104. The UE 104 may receive the paging message, and may transition from the light connection state to the connected state.

In some embodiments, the light connection state may also be referred to as light RRC connection state. In some embodiments, the light connection state may be characterized by having the UE context stored (e.g., in the UE and the eNB), even after being configured into light RRC connection, and by being reachable within a RAN configured area via a RAN-initiated paging using the resumeID.

In some embodiments, a UE may be in RRC_CONNECTED when an RRC connection has been established or configured into light RRC connection. If this is not the case, e.g., no RRC connection is established, the UE may be in a RRC_IDLE state. In some embodiments, the light RRC connection may be a sub-state of RRC _CONNECTED state.

In some embodiments, in a light RRC connection, a UE specific DRX may be configured by upper layers or by dedicated signaling. In some embodiments, the UE 104 may apply RRC_IDLE procedures (e.g., during a light RRC connection), may perform periodic RAN paging area update, and/or may perform RAN paging area update when moving out of the configured RAN paging area.

In some embodiments, an RRC _CONNECTED UE may enter into a light RRC connection when, for example, the RRCConnectionRelease message includes a rrc-LightConnectionIndication, as discussed in further details herein. In an example, when entering into light RRC connection, a UE may be configured with a ran-PagingCycle and ran-PagingAreaInfo, as discussed in further details herein.

In some embodiments, resumption of an RRC connection from a light RRC connection may be initiated upon detecting MO access, upon triggering of RAN paging area update or upon reception of a Paging message including UE identity, when the UE has a stored UE context, and resumption of an RRC connection from a light RRC connection is permitted by E-UTRAN.

In some embodiments, the UE 104 may use discontinuous reception or DRX in the idle state or the light connection state in order to reduce power consumption. In some embodiments, the DRX parameters 180 in **Figs. 1A-1B** may be for light connected state of a UE 104. In some embodiments, the DRX parameters 180 may also be referred to as RAN configured DRX parameters 180, as the RAN 102 (e.g., an eNB 102) may configure the parameters 180. In some embodiments, the parameters 180 may be applicable for DRX cycles during light connection state of UEs 104, and/or may be applicable for eDRX (extended DRX) cycles during light connection state of UEs 104.

In some embodiments, the MME 101c may also configure and transmit DRX parameters to a UE 104 (e.g., during an initial attachment procedure of the UE). In contrast to the MME configured DRX parameters, the parameters 180, in some examples, may be configured specifically by RAN 102, e.g., a eNB 102 - hence, the DRX parameters 180 may be referred to as RAN configured DRX parameters 180 (e.g., to distinguish the parameters 180 from MME configured DRX parameters).

In some embodiments, the teachings of this disclosure may not be limited to light connection state as defined in the 3GPP standard, but may also be applicable to other appropriate UE states as well. For example, 5G standard include a RRC inactive state (e.g., where a RAN and a UE store the UE context and/or the UE may be in connected mode for a core network). The teachings of this disclosure may not be limited to light connection state as defined in the 3GPP standard, but may also be applicable to the RRC inactive state defined in the 5G standard.

In some embodiments, the RAN configured DRX parameters 180 may be for the RAN configured DRX cycle. In some embodiments, the RAN configured DRX parameters 180 may be also include other parameters, such as, RAN configured nB parameters (which may be similar to legacy as one of parameters to derive the RAN configured Paging Frame and Paging Occasion).

In some embodiments, the eNB 102 and/or the UE 104 may support extended DRX (eDRX). For example, in a DRX cycle, the paging cycle interval (e.g., interval between consecutive paging cycles) may be relatively small (e.g., 2.56 seconds, 5.12 seconds, etc.). However, eDRX may extend the paging cycle interval substantially. For example, in eDRX, the paging cycle interval may be several seconds, several minutes, or even several hours. In some embodiments, in a regular DRX cycle and when the UE 104 is in a light connection state, the UE 104 may wake up (e.g., when the UE 104 is to possibly receive a paging message) for a relatively short duration (e.g., measured in milliseconds). However, in eDRX, as the paging cycle interval may be relatively long, the UE 104 may wake up (e.g., when the UE 104 is to possibly receive a paging message) for a relatively long duration. In some embodiments, a Paging Time Window (PTW) length or PTW length may define a time duration for which the UE 104 is to wake up and monitor for paging messages, e.g., while checking for possible paging message during eDRX cycle. In some embodiments, the PTW length may be a parameter for eDRX, and not for regular DRX.

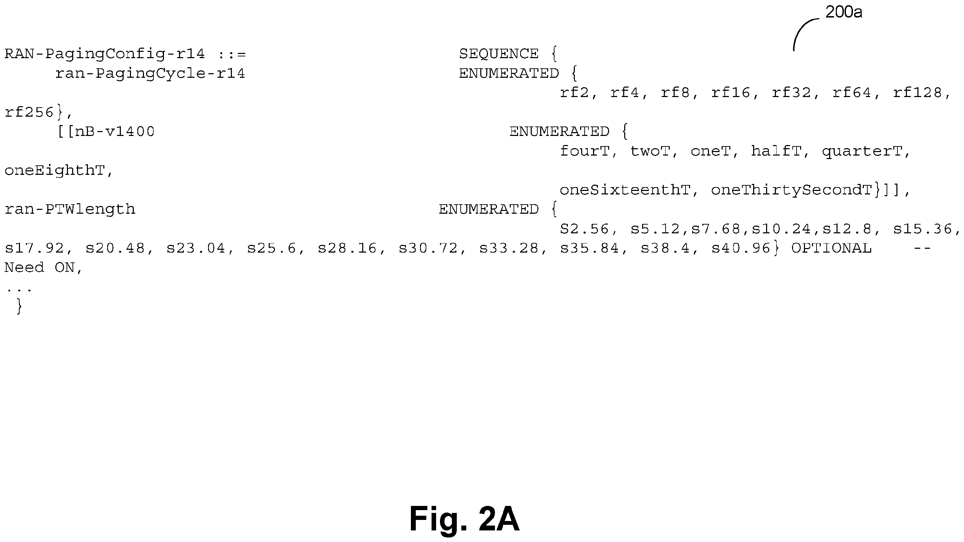

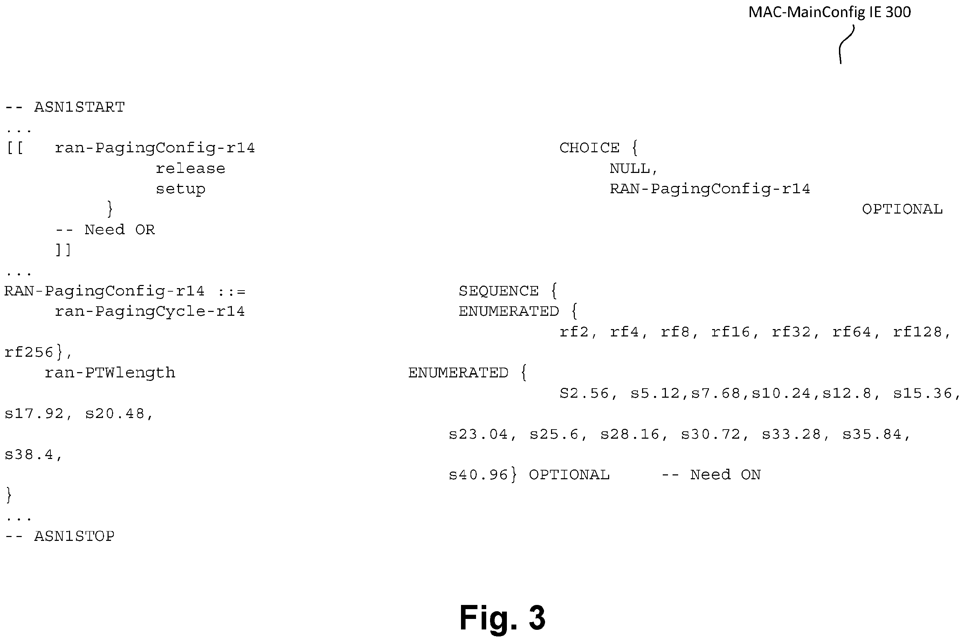

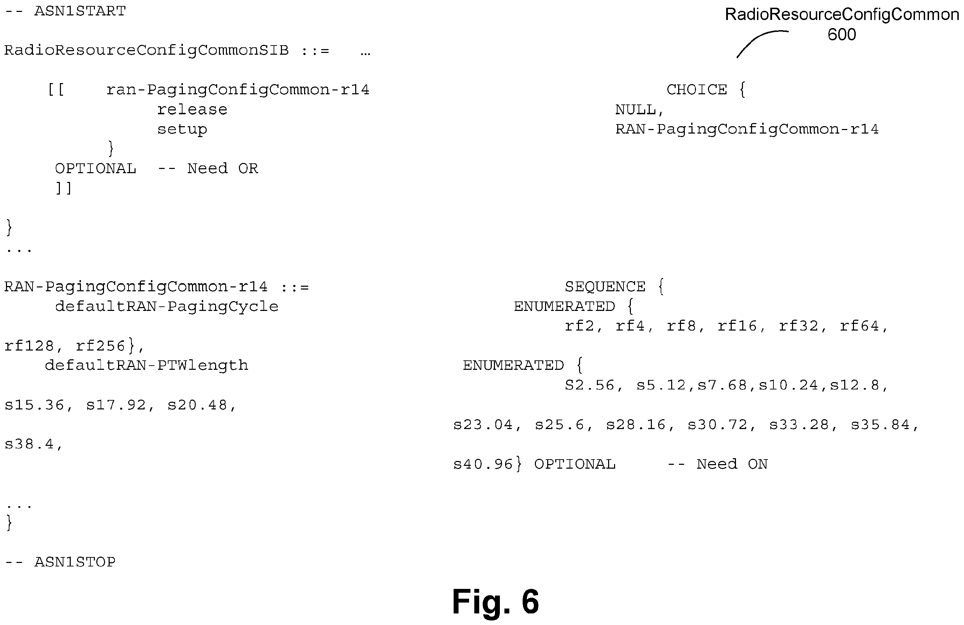

In some embodiments, during an initial attach process, a UE 104 may be assigned a PTW length (e.g., the by MME 101c, or by another component of the EPC 101), where this PTW length may also be referred to as originally assigned PTW length. Also, if eDRX is supported by the UE 104, the eNB 102 may assign a new specific PTW length to a specific UE 104, also referred to as RAN configured UE specific PTW length (e.g., as discussed herein later with respect to **Figs. 2A****,** **3**). Furthermore, if eDRX is supported by the UE 104, the eNB 102 may also assign a default PTW length to a plurality of UEs associated with the eNB 102 (and may broadcast such a PTW message via broadcast signaling), also referred to as RAN configured default PTW length (e.g., as discussed herein later with respect to **Fig. 6**). Thus, the UE 104 may have one of more of three PTW lengths: originally assigned PTW length, RAN configured UE specific PTW length, and RAN configured default PTW length, and these PTW lengths may be different form each other. In some embodiments, the UE 104 may select one of these PTW lengths and operate in accordance with the selected PTW length. In some embodiments, the UE 104 may select the PTW length having the longest duration among these PTW lengths. In some embodiments, if RAN configured UE specific PTW length is not available, the UE 104 may select the longest among the originally assigned PTW length and the RAN configured default PTW length. In some embodiments, if the RAN configured UE specific PTW length and the RAN configured default PTW length are not available, the UE 104 may select and operate in accordance with the originally assigned PTW length.

In some embodiments, if eDRX is supported, same eDRX parameters originally configured by the MME 101c may be used for the DRX parameters 180. In some examples, in case of UE state mismatch between UE and MME, Paging Hyperframe (PH), PTW start and PO/PF (Paging Frame/Paging Occasion) calculations may be same for all nodes. However, RAN 102 may configure a new value of PTW length if, for example, the UEs 104 may have to be reachable for longer time than the originally configured PTW. Configuring a larger value of PTW length may not affect the legacy calculations of PH, PTW start and PO/PF. However, configuring smaller values of PTW may result in page miss in case of UE state mismatch.

In some embodiments, the parameters of the RAN configured DRX parameters 180 and PTW length for eDRX may be defined independently or within a structure (e.g., as optional parameters). **Fig. 2A** illustrates a first example format 200a of the RAN configured DRX parameters 180 and PTW length for eDRX, according to some embodiments. In the format 200a, the phrase RAN-PagingConfig indicates that the format may be associated with RAN configured DRX parameters 180. The parameter Ran-PagingCycle may be a RAN-based paging cycle parameter that may be used to derive a parameter 'T' in Technical Specification (TS) 36.304 (or in one or more subsequent TSs) of the 3GPP standard, where the parameter T may be the DRX cycle of the UE. The parameter Ran-PagingCycle may have a value of one of rf2, rf4, ..., rf256, where, for example, the value rf2 may correspond to 2 radio frames (rf), value rf4 may correspond to 4 radio frames, and so on. In some embodiments, the parameter Ran-PagingCycle may provide an indication of a paging interval.

The parameter nB may have a value of one of 4T, 2T, T, T/2, T/4, T/8, T/16, T/32, where T may be the DRX cycle of the UE. In some examples, the parameter nB may be relevant to narrowband (NB) devices, NB-IoT (Internet of Things) devices, etc.

The parameter ran-PTWlength may be used to derive the parameter PTW length L (e.g., as discussed in TS 36.304), and may be measured in seconds. The ran-PTWlength parameter may have a value of one of S2.56, s5.12, ..., s40.96, where, for example, s2.56 may correspond to 2.56 seconds, s5.12 may correspond to 5.12 seconds, and so on.

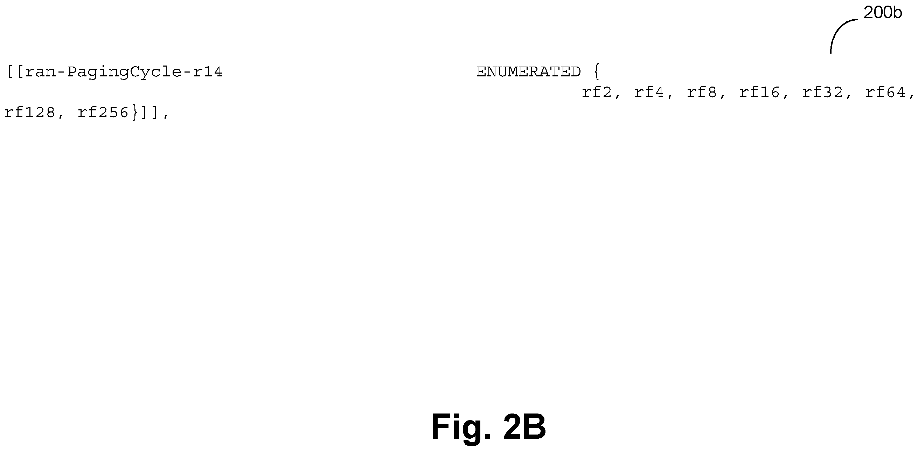

**Fig. 2B** illustrates a second example format 200b of the RAN configured DRX parameters 180, according to some embodiments. In some embodiments, the format 200b comprises the parameter ran-PagingCycle, which has been discussed with respect to **Fig. 2A****.**

Although **Figs. 2A-2B** illustrate example parameters and possible values of these parameters, the parameter names and possible values may be different in some embodiments. For example, in some embodiments, contrary to the illustration in **Figs. 2A-****2B,** the parameter ran-PagingCycle may have a value of one of rf32, rf64, rf128, and rf256 (e.g., the parameter ran-PagingCycle may take a value from these four rf values).

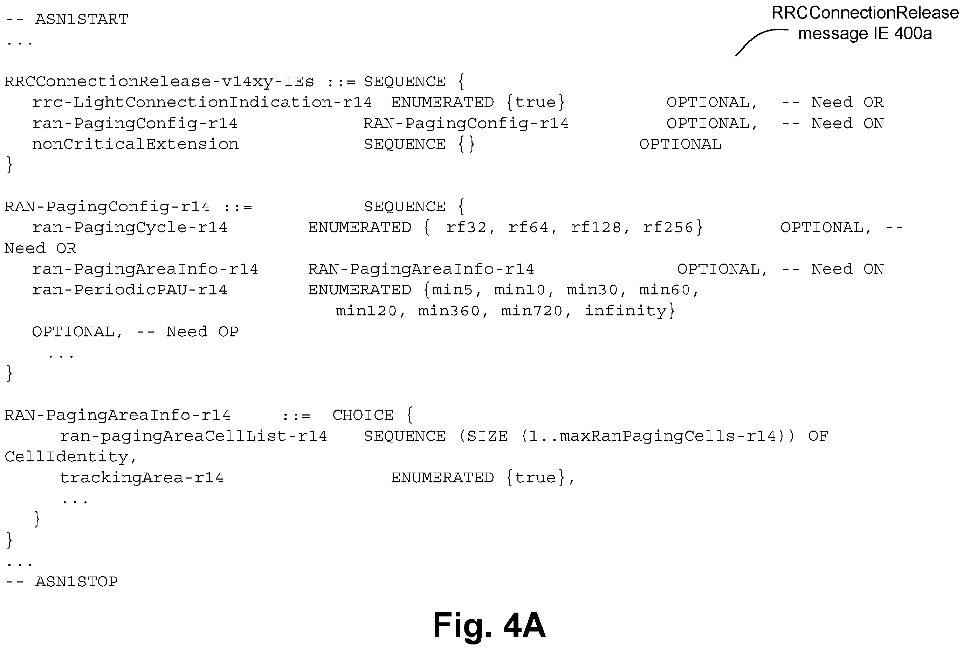

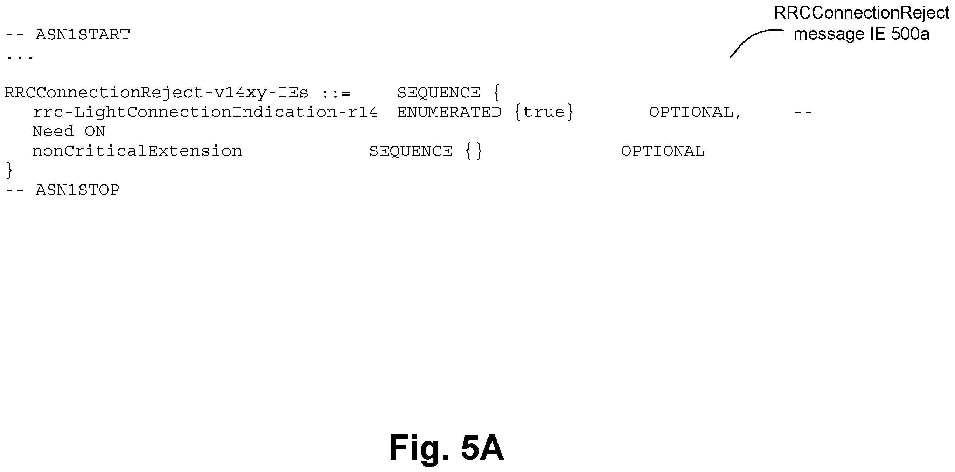

In some embodiments, the RAN configured DRX parameters 180 and/or the PTW length for eDRX (e.g., which may be for a light connection of the UE 104) may be transmitted from a eNB 102 to a UE 104 via, for example, dedicated signaling. Such transmission of the RAN configured DRX parameters 180 and/or the PTW length may be specific to a UE (e.g., individual UEs may have individual and specific values of these parameters). Examples of transmission of such parameters via dedicated signaling may comprise transmission via MAC-MainConfig of RRC Connection Reconfiguration messages (e.g., discussed with respect to **Fig. 3**), via RRC Connection Release messages (e.g., discussed with respect to **Fig. 4A-4B**), via RRC Connection Reject messages (e.g., discussed with respect to **Figs. 5A-5B**), and/or the like.

In some embodiments, the RAN configured DRX parameters 180 and/or the PTW length for eDRX (e.g., which may be for a light connection of the UE 104) may also be transmitted from a eNB 102 to multiple UEs 104 via, for example, broadcast signaling (e.g., via SIB2 message). For example, such transmitted parameters may be applicable to one or more UEs (e.g., all UEs) in a cell (e.g., may be cell default RAN configured DRX configuration).

**Fig. 3** illustrates transmission of RAN configured DRX parameters 180 via a MAC-MainConfig Information Element (IE) 300 of a RRC Connection Reconfiguration message, according to some embodiments. In some embodiments, the IE MAC-MainConfig 300 may be used to specify media access control address (MAC) main configuration for signaling and data radio bearers. In some embodiments, the MAC-MainConfig IE 300 may be included within the RRC Connection Reconfiguration message.

In some embodiments, MAC main configuration parameters may be configured independently per Cell Group (e.g., master cell group (MCG) and/or secondary cell group (SCG)), e.g., unless explicitly specified otherwise. The MAC-MainConfig IE 300 may be transmitted from a eNB 102 to a UE 104.

In some embodiments, the MAC-MainConfig IE 300 may comprise many elements - only some of the elements of the IE 300 (e.g., that are relevant to the RAN configured DRX parameters 180 for light connecting state) are illustrated in **Fig. 3** for purposes of illustrative clarity. Similarly, various figures (e.g., **Figs. 3-7**) of this disclosure illustrate various respective information elements - only relevant portions of these information elements are illustrated in the figures. In at least some of these figures, the omitted sections are symbolically represented by "... ".

In some embodiments, the MAC-MainConfig IE 300 may also include a choice between release and setup of ran-PagingConfig parameter. In an example, the choice of release may release an information component of the IE 300 (e.g., release a previously set ran-PagingConfig information component). In an example, the choice of setup may set up the ran-PagingConfig information component, e.g., based on the value of various DRX parameters included in the IE 300.

In some embodiments, the information element ran-PagingConfig in the MAC-MainConfig IE 300 may include a RAN paging cycle parameter ran-PagingCycle. In some embodiments and as illustrated in the example of **Fig. 3****,** the parameter ran-PagingCycle may have a value of one of rf2, rf4, ... , rf256 (e.g., as discussed with respect to **Fig. 2**). In some other embodiments and although not illustrated in the example of **Fig. 3****,** the parameter ran-PagingConfig may have a value of one of rf32, rf64, rf128, or rf256. The parameter ran-PagingConfig has been discussed with respect to **Fig. 2** in further details.

In some embodiments, the MAC-MainConfig IE 300 may also include the parameter ran-PTWlength. This parameter and possible values of this parameter has been discussed with respect to **Fig. 2** in further details.

**Fig. 4A** illustrates transmission of RAN configured DRX parameters 180 via an IE 400a associated with a RRC Connection Release message (also referred to as "RRCConnectionRelease message"), according to some embodiments. In some embodiments, the RRC Connection Release message may be used to command a release of an RRC connection. The IE 400a of the RRC Connection Release message may have a signaling radio bearer SRB1, may have Dedicated Control Channel (DCCH) as the logical channel for transmission, and may be transmitted from a eNB 102 to a UE 104.

In some embodiments, the IE 400a may comprise a RRC light connection indication parameter or field rrc-LightConnectionIndication. In an example, if present (or if true) in the IE 400a, this parameter may indicate that the UE 104 is to enter or remain in the light RRC connection state.

In some embodiments, the IE 400a may further comprises a RAN paging cycle parameter or field ran-PagingCycle. As discussed with respect to **Fig. 2****,** in some embodiments, this parameter may refer to the paging DRX cycle, e.g., when the UE is in light RRC connection state. In some embodiments, a value of this parameter may be expressed in radio frames, and this parameter may have a value of one of rf32, rf64, r128, and rf256. In an example, rf32 may correspond to 32 radio frames, rf64 may correspond to 64 radio frames, and so on.

In some embodiments, the IE 400a may include a parameter or field ran-PagingAreaInfo, which may refer to the cells that may belong to the RAN paging area, e.g., defined as a list of cell identity or the tracking area. In some embodiments, the E-UTRAN 102 (e.g., eNB 102) may include ran-PagingAreaInfo in RRCConnectionRelease message, or may store in the UE 104 and the eNB 102.

In some embodiments, the IE 400a may further comprises a ran-PeriodicPAU paging area update (PAU) parameter or field. This parameter may refer to a paging area update (PAU) timer that may trigger a periodic RAN PAU procedure in the UE 104. This parameter may have a value of one of min5, min10, ..., min720, infinity. The value min5 may correspond to 5 minutes, the value min10 corresponds to 10 minutes, and so on. In an example, if this parameter is not transmitted to the UE 104, the UE 104 may apply a default value of 30 minutes.

In some embodiments, the IE 400a may further comprises a trackingArea parameter of field. In some embodiments, this field may indicate that the RAN paging area is equal to the tracking area list configured to the UE, e.g., as defined in TS 23.401 of the 3GPP standard.

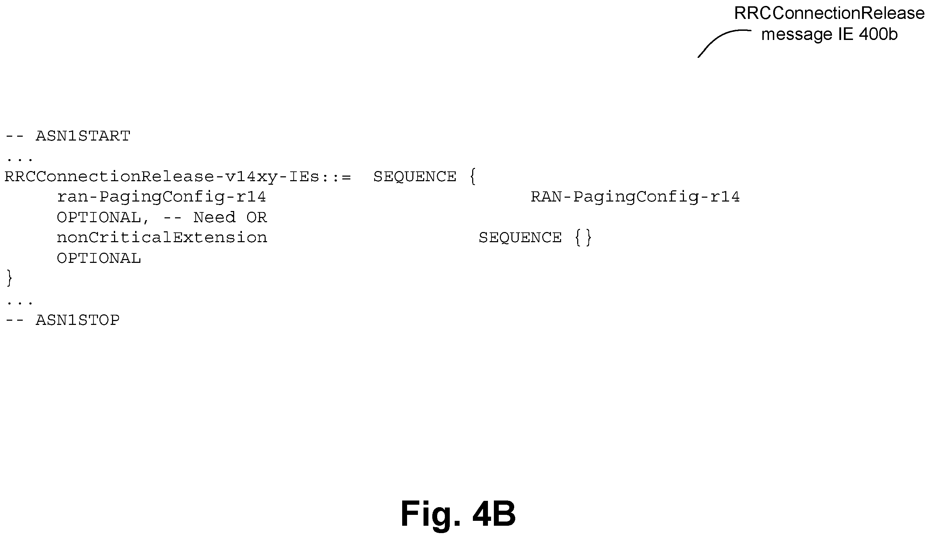

**Fig. 4B** illustrates transmission of RAN configured DRX parameters 180 via an IE 400b associated with a RRCConnectionRelease message, according to some embodiments. In some embodiments, the RRCConnectionRelease message may be used to command a release of an RRC connection. The RRCConnectionRelease message may have a signaling radio bearer SRB1, may have Dedicated Control Channel (DCCH) as the logical channel for transmission, and may be transmitted from a eNB 102 to a UE 104.

In some embodiments, the IE 400b may comprise a ran-PagingConfig parameter or field, which, for example, may comprise one or more parameters of the RAN configured DRX parameters 180. This parameter has been discussed with respect to **Fig. 4A****.**

**Fig. 5A** illustrates transmission of RAN configured DRX parameters 180 via an IE 500a associated with a RRC Connection Reject message (also referred to as "RRCConnectionReject message"), according to some embodiments. In some embodiments, the RRC Connection Reject message may be used to reject a RRC connection establishment. The IE 500a of the RRC Connection Release message may have a signaling radio bearer SRB0, may have common Control Channel (DCCH) as the logical channel for transmission, and may be transmitted from a eNB 102 to a UE 104.

In some embodiments and merely as an example, while the UE 104 is in a light connection state, the UE 104 may want to switch to a connected state, and request a RRC connection message to the eNB 102. However, the eNB 102 may not have sufficient capacity to transition the UE 104 to the connected state, and the eNB 102 may transmit the RRC Connection Reject message to the UE 104.

In some embodiments, the RRC Connection Reject message may include a flag or indicator, e.g., to indicate to the UE 104 whether to stay in the light connection state, or transition to the idle state. For example, in some embodiments, the IE 500a may comprise a RRC Light Connection Indication parameter or field (e.g., rrc-LightConnectionIndication), which may be a flag or indicator to indicate whether the UE 104 is to stay in the light connection state, or transition to the idle state. In some embodiments, this flag may also indicate that the previously configured RAN configured DRX parameters may be used by the UE 104. For example, if present (or if true) in the RRC Connection Reject message, this flag may indicate that the UE 104 is to remain in the light RRC connection. In an example, if present (or if true), this flag may also indicate that the UE 104 is to not release a stored context information. In an example, if present (or if true), this flag may instruct the UE 104 to reuse a previously stored DRX configuration 180. Thus, in an example, if the RRC Light Connection Indication flag is present in the RRC Connection Reject message, the RRC Connection Reject message may not include various DRX configuration 180 (e.g., ran-PagingCycle), e.g., because a stored DRX configuration 180 may be re-used by the UE 104.

In some embodiments, if the rrc-Light Connection Indication flag is not present (or is false) in the RRC Connection Reject message, the UE 104 may transition to an idle state.

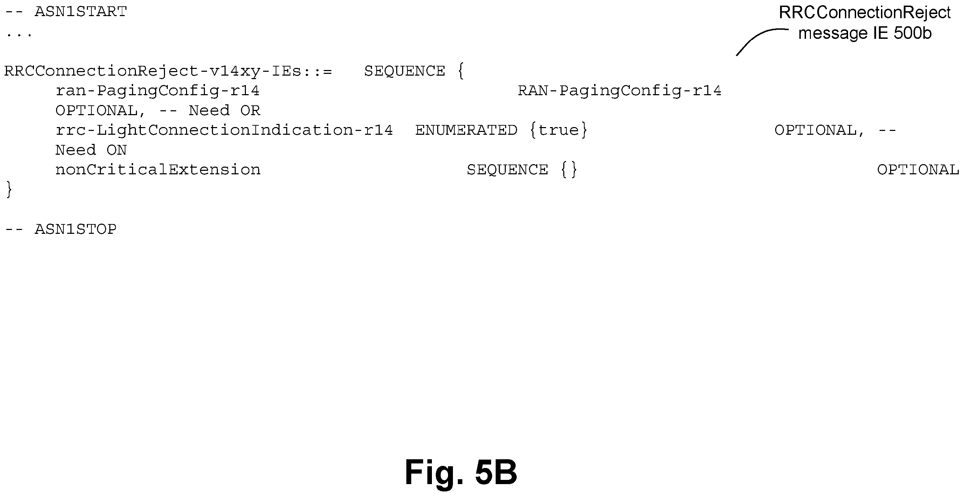

**Fig. 5B** illustrates transmission of RAN configured DRX parameters 180 via an IE 500b of a RRC Connection Reject message, according to some embodiments. In some embodiments, the RRC Connection Reject message may be used to reject a RRC connection establishment. The IE 500b of the RRC Connection Release message may have a signaling radio bearer SRB0, may have common Control Channel (DCCH) as the logical channel for transmission, and may be transmitted from a eNB 102 to a UE 104.

In some embodiments, the IE 500b may comprise a ran-PagingConfig information component. This information component has been discussed herein before, e.g., with respect to at least **Fig. 2****,** and hence, would not be discussed in further details.

In some embodiments, the IE 500b may also comprise the rrc-LightConnectionIndication parameter or field, e.g., as discussed with respect to **Fig. 5A****.**

**Figs. 3**, **4A-4B**, **and** **5A-5B** illustrate transmission of RAN configured DRX parameters 180 via UE specific dedicated signaling, e.g., transmission via MAC-MainConfig of RRC Connection Reconfigure messages (e.g., discussed with respect to **Fig. 3**), via RRC Connection Release messages (e.g., discussed with respect to **Fig. 4A-4B**), via RRC Connection Reject messages (e.g., discussed with respect to **Figs. 5A-5B**), etc. In some embodiments, the RAN configured DRX parameters 180 and/or the PTW length for eDRX (e.g., which may be for a light connection of the UE 104) may also be transmitted from a eNB 102 to multiple UEs 104 via, for example, broadcast signaling. **Fig. 6** illustrates transmission of RAN configured DRX parameters 180 via broadcast signaling with a Radio Resource Configuration Common message (also referred to as a RadioResourceConfigCommon message) or a Radio Resource Configuration Common SIB (System Information Block) message (e.g., SIB2), according to some embodiments. Specifically, **Fig. 6** illustrates an IE 600 of a RadioResourceConfigCommon message or a RadioResourceConfigCommonSIB message, where the IE 600 may include the RAN configured DRX parameters 180 and/or the PTW length for eDRX.

In some embodiments, the RadioResourceConfigCommonSIB message or the RadioResourceConfigCommon message of the IE 600 may be used to specify common radio resource configurations in the system information and in the mobility control information, respectively. For example, these messages may specify random access parameters and the static physical layer parameters.

In some embodiments, the IE 600 may include a default RAN Paging Cycle parameter or field defaultRAN-PagingCycle, which may be a default value of the RAN-PagingCycle parameter discussed herein previously. In the example of **Fig. 6****,** the defaultRAN-PagingCycle parameter may take a value of one of rf2, rf4, ..., rf256, where rf2 may correspond to two radio frames, rf4 may correspond to four radio frames, and so on. Although not illustrated in **Fig. 6** and contrary to **Fig. 6****,** in some embodiments, the defaultRAN-PagingCycle parameter may take a value of one of rf32, rf64, rf128, and rf256.

In some embodiments, the IE 600 may also include a default RAN PTW length parameter or field defaultRAN-PTWlength, which may be a default value of the PTW length parameter discussed herein previously. In the example of **Fig. 6****,** the defaultRAN-PTWlength parameter may take a value of one of s2.56, s5.12, ..., s40.96, where s2.56 may correspond to 2.56 seconds, s5.12 may correspond to 5.12 seconds, and so on.

In some embodiments, the broadcast signaling associated with the IE 600, transmitted by an eNB 102, may set the default values of one or more parameters for a plurality of UEs 104 (e.g., UEs 104 that are within the cell group of the eNB 102).

In some embodiments, the RAN configured DRX parameters 180 may be defined as being mandatory for any UE 104 supporting RAN configured paging, or may be defined as being optional for any UE 104. In some embodiments, a eNB 102 may store information associated with whether the RAN configured DRX parameters 180 are optional or mandatory for a specific UE 104. For example, a UE radio capability parameter may be defined and/or stored in a eNB 102, which may indicate to the eNB 102 if a corresponding UE 104 supports the features associated with the RAN configured DRX parameters 180. In some embodiments, this UE radio capability may be defined as a new independent IE, or may be defined as part of existing one or more IEs, e.g., an IE associated with mac-Parameters.

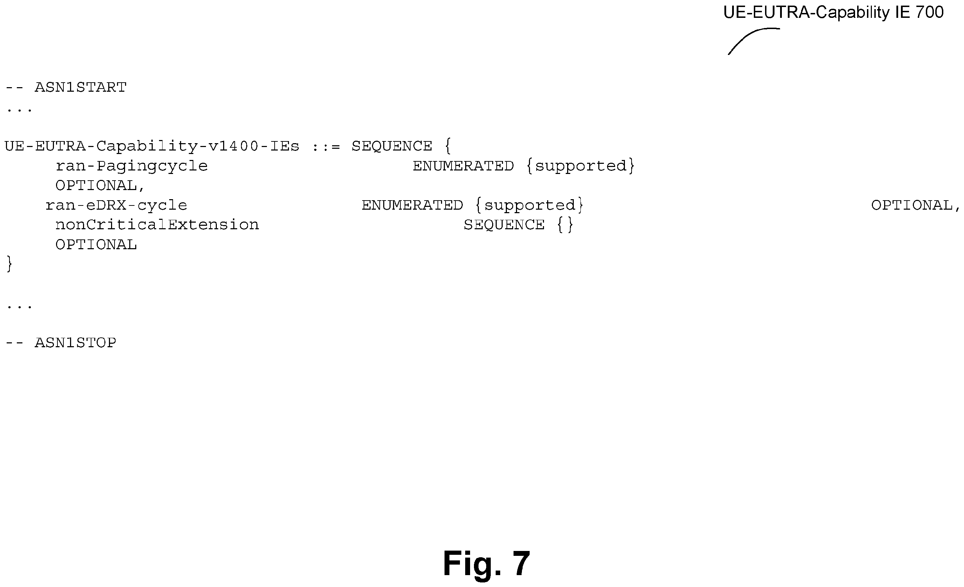

**Fig. 7** illustrates an IE 700 of a UE-EUTRA-Capability message, where the IE 700 may indicate whether a UE 104 may support RAN configured DRX cycle and/or RAN configured PTW length (e.g., in a light connection state), according to some embodiments. In some embodiments, the UE-EUTRA-Capability message may convey UE Capability Information, which may be in the form of an RRC message. For example, a UE 104 may transmit the UE-EUTRA-Capability message to the eNB 102 (e.g., during an initial registration process of the UE 104, or at a later time).

In some embodiments, the IE 700 may include a flag ran-Pagingcycle, which may indicate whether or not the UE 104 supports RAN configured DRX cycle. In some embodiments, the IE 700 may also include a flag ran-eDRX-cycle, which may indicate whether or not the UE 104 supports RAN configured PTW length and/or RAN configured eRDX cycle.

In some embodiments, a parameter T may be the DRX cycle of a UE 104. In some embodiments, during an initial attach process, a UE 104 may be assigned a value of the DRX cycle T (e.g., the by MME 101c, or another component of the EPC 101, or by an appropriate upper layer component), where this DRX cycle T may be referred to as originally assigned DRX value. In some embodiments, the DRX cycle T may also have a default DRX value broadcast to multiple UEs in a cell (e.g., which may be the default for a plurality of UEs in a cell). In some embodiments, the DRX cycle T may also have a RAN configured DRX value (e.g., which may be included in, or derived from the RAN configured DRX parameter 180). In some embodiments, for a UE in light RRC connection, the DRX cycle T may be determined by a shortest of (i) the RAN configured DRX value (e.g., if configured by the eNB), (ii) the default DRX value (e.g., if included in broadcast signaling), or (iii) originally assigned DRX value (e.g., if allocated by upper layers).

In some embodiments, a UE 104 may be configured by upper layers with an eDRX cycle T_{eDRX}. The UE may operate in eDRX if (e.g., only if) the cell indicates support for eDRX in system information. A UE in light RRC connection may not operate paging in eDRX.

In some embodiments, a parameter L may be the PTW length measured in seconds. In some embodiments, during an initial attach process or a Tracking Area Update procedure, a UE 104 may be assigned a value of the PTW length L (e.g., the by MME 101c, or another component of the EPC 101, or by an appropriate upper layer component), where this value of L may be referred to as originally assigned PTW length L. In some embodiments, the parameter L may also have a default PTW length value broadcast to multiple UEs in a cell (e.g., broadcast via SIB2, which may be the default for a plurality of UEs in a cell). In some embodiments, the parameter L may also have a RAN configured PTW length value (e.g., which may be included in, or derived from the RAN configured DRX parameter 180). In some embodiments, for a UE in light RRC connection, the PTW length L may be determined to be a longest of (i) the originally assigned PTW length L (e.g., configured by MME 101c during an initial attach or a TAU update), (ii) the default PTW length L (e.g., if broadcast via SIB2), or (iii) the RAN configured PTW length L (e.g., if configured by the eNB).

In an example, if eDRX is supported for a UE 104 in the idle mode with light connection indication, a eNB 102a may use a UE identification (ID) that may be used for calculating legacy paging hyperframe (PH) and PTW start. In some embodiments, a new UE ID (e.g., UE_ID_H, which may be derived from SAE-Temporary Mobile Subscriber Identity or S-TMSI), which may not be correlated to the UE ID used for PO/PF calculations, may be used (e.g., used for inter-eNB paging messages). Thus, two different IDs for a UE may be used: (i) a UE ID for calculating legacy PH and PTW start, and (ii) a new UE_ID_H that may be different from the UE ID.

In some embodiments, in case of state mismatch between a UE 104 and the MME 101c, legacy calculation of PH and PTW start may be aligned with the PH and PTW calculations for the UE in the light connection state. A eNB 102 may store the legacy value of UE_ID_H or S-TMSI to calculate UE_ID_H, e.g., in addition to legacy value of UE_ID.

In some embodiments, while a UE 104 is in a light connection state and operating in accordance with the eDRX cycle, the UE 104 may move to a neighboring eNB from a serving eNB. In some embodiments, to keep track of the UE 104 while transmitting paging messages to the UE 104, a serving eNB may transmit an inter-eNB paging message to one or more neighboring eNBs within a tracking area(e.g., using the backhaul channel 160 of **Fig. 1B**). The inter-eNB paging message may be a X2AP (X2 Application Protocol) based paging message.

If, for example, the inter-eNB paging message does not include eDRX information of the UE 104, the neighboring eNBs may be unaware that the UE is using eDRX. For example, a neighboring eNB may transmit a RRC paging message to the UE 104, assuming that the UE is reachable (although the UE may be in the light connection mode with eDRX).

In some embodiments, the inter-eNB paging message may include eDRX information (e.g., eDRX cycle, PTW length, UE_ID_H, etc.). Upon receiving the eDRX information, the neighboring eNBs may calculate the PH and PTW start parameters, and may transmit the RRC paging message to the UE 104 is accordance with the calculated PH and PTW start parameters.

In some embodiments, the inter-eNB paging message may include number of Hyper SFN (H-SFN) and SFN until the end of the PTW is present. The neighboring eNBs may transmit RRC paging message, e.g., if the next paging occasion for the UE is within the PTW. In such a scenario, the neighboring eNBs may not calculate the PH and PTW start for the UE 104.

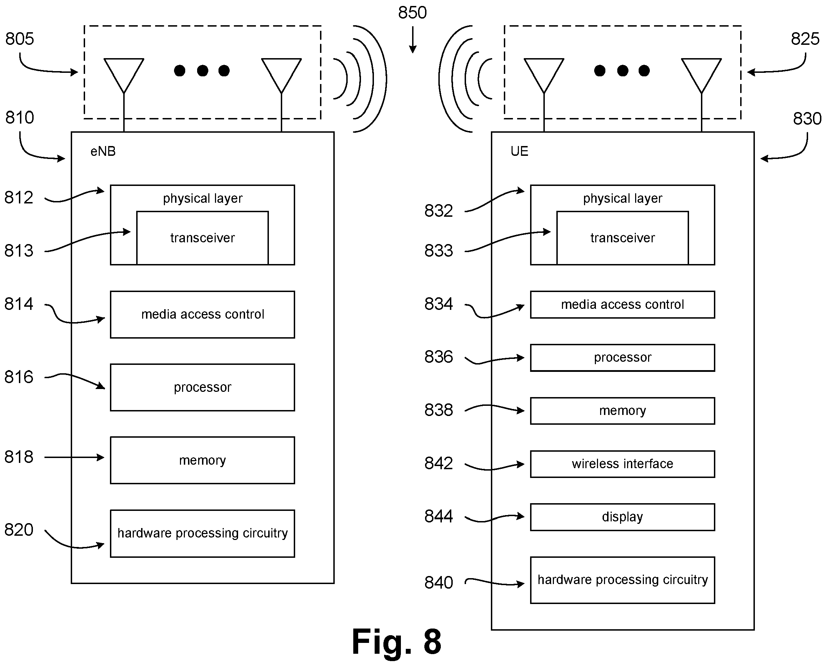

**Fig. 8** illustrates an eNB and a UE, in accordance with some embodiments of the disclosure. **Fig. 8** includes block diagrams of an eNB 810 and a UE 830 which are operable to co-exist with each other and other elements of an LTE network. High-level, simplified architectures of eNB 810 and UE 830 are described so as not to obscure the embodiments. It should be noted that in some embodiments, eNB 810 may be a stationary non-mobile device. In some embodiments, the UE 830 of **Fig. 8** may correspond to any UE discussed herein.

In some embodiments, the eNB 810 is coupled to one or more antennas 805, and UE 830 is similarly coupled to one or more antennas 825. However, in some embodiments, eNB 810 may incorporate or comprise antennas 805, and UE 830 in various embodiments may incorporate or comprise antennas 825.

In some embodiments, antennas 805 and/or antennas 825 may comprise one or more directional or omni-directional antennas, including monopole antennas, dipole antennas, loop antennas, patch antennas, microstrip antennas, coplanar wave antennas, or other types of antennas suitable for transmission of RF signals. In some MIMO (multiple-input and multiple output) embodiments, antennas 805 are separated to take advantage of spatial diversity.

eNB 810 and UE 830 are operable to communicate with each other on a network, such as a wireless network (e.g., using licensed or unlicensed spectrum). eNB 810 and UE 830 may be in communication with each other over a wireless communication channel 850, which has both a downlink path from eNB 810 to UE 830 and an Uplink path from UE 830 to eNB 810.

As illustrated in **Fig. 8****,** in some embodiments, eNB 810 may include a physical layer circuitry 812, a MAC (media access control) circuitry 814, a processor 816, a memory 818, and a hardware processing circuitry 820. A person skilled in the art will appreciate that other components not shown may be used in addition to the components shown to form a complete eNB.

In some embodiments, physical layer circuitry 812 includes a transceiver 813 for providing signals to and from UE 830. Transceiver 813 provides signals to and from UEs or other devices using one or more antennas 805. In some embodiments, MAC circuitry 814 controls access to the wireless medium. Memory 818 may be, or may include, a storage media/medium such as a magnetic storage media (e.g., magnetic tapes or magnetic disks), an optical storage media (e.g., optical discs), an electronic storage media (e.g., conventional hard disk drives, solid-state disk drives, or flash-memory-based storage media), or any tangible storage media or non-transitory storage media. Hardware processing circuitry 820 may comprise logic devices or circuitry to perform various operations. In some embodiments, processor 816 and memory 818 are arranged to perform the operations of hardware processing circuitry 820, such as operations described herein with reference to logic devices and circuitry within eNB 810 and/or hardware processing circuitry 820.

Accordingly, in some embodiments, eNB 810 may be a device comprising an application processor, a memory, one or more antenna ports, and an interface for allowing the application processor to communicate with another device.

As is also illustrated in **Fig. 8****,** in some embodiments, UE 830 may include a physical layer circuitry 832, a MAC circuitry 834, a processor 836, a memory 838, a hardware processing circuitry 840, a wireless interface 842, and a display 844. A person skilled in the art would appreciate that other components not shown may be used in addition to the components shown to form a complete UE.

In some embodiments, physical layer circuitry 832 includes a transceiver 833 for providing signals to and from eNB 810 (as well as other eNBs). Transceiver 833 provides signals to and from eNBs or other devices using one or more antennas 825. In some embodiments, MAC circuitry 834 controls access to the wireless medium. Memory 838 may be, or may include, a storage media/medium such as a magnetic storage media (e.g., magnetic tapes or magnetic disks), an optical storage media (e.g., optical discs), an electronic storage media (e.g., conventional hard disk drives, solid-state disk drives, or flash-memory-based storage media), or any tangible storage media or non-transitory storage media. Wireless interface 842 may be arranged to allow the processor to communicate with another device. Display 844 may provide a visual and/or tactile display for a user to interact with UE 830, such as a touch-screen display. Hardware processing circuitry 840 may comprise logic devices or circuitry to perform various operations. In some embodiments, processor 836 and memory 838 may be arranged to perform the operations of hardware processing circuitry 840, such as operations described herein with reference to logic devices and circuitry within UE 830 and/or hardware processing circuitry 840.

Accordingly, in some embodiments, UE 830 may be a device comprising an application processor, a memory, one or more antennas, a wireless interface for allowing the application processor to communicate with another device, and a touch-screen display.

Elements of **Fig. 8****,** and elements of other figures having the same names or reference numbers, can operate or function in the manner described herein with respect to any such figures (although the operation and function of such elements is not limited to such descriptions). For example, **Figs. 1A-1B** also depict embodiments of eNBs, hardware processing circuitry of eNBs, UEs, and/or hardware processing circuitry of UEs, and the embodiments described with respect to **Figs. 2A-7** can operate or function in the manner described herein with respect to any of the figures.

In addition, although eNB 810 and UE 830 are each described as having several separate functional elements, one or more of the functional elements may be combined and may be implemented by combinations of software-configured elements and/or other hardware elements. In some embodiments of this disclosure, the functional elements can refer to one or more processes operating on one or more processing elements. Examples of software and/or hardware configured elements include Digital Signal Processors (DSPs), one or more microprocessors, DSPs, Field-Programmable Gate Arrays (FPGAs), Application Specific Integrated Circuits (ASICs), Radio-Frequency Integrated Circuits (RFICs), and so on.

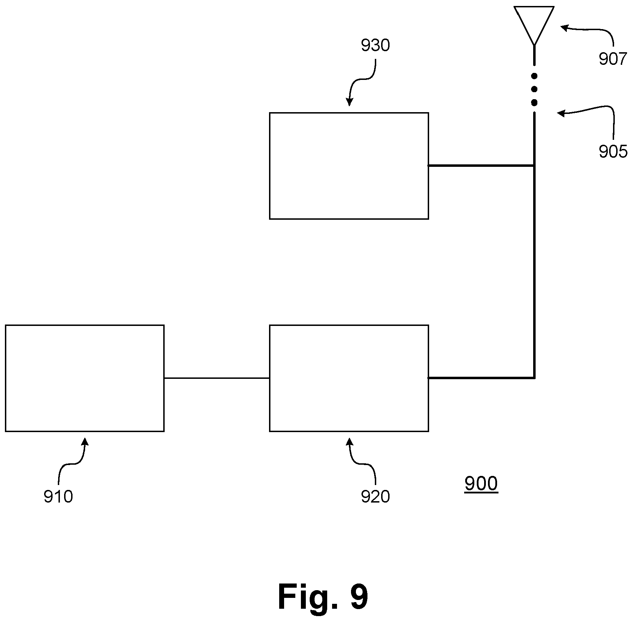

**Fig. 9** illustrates hardware processing circuitries for an eNB that may generate eNB configured DRX parameters for a light connection state of a UE, according to some embodiments.

With reference to **Fig. 8****,** an eNB may include various hardware processing circuitries discussed below, which may in turn comprise logic devices and/or circuitry operable to perform various operations. For example, in **Fig. 8****,** eNB 810 (or various elements or components therein, such as hardware processing circuitry 820, or combinations of elements or components therein) may include part of, or all of, these hardware processing circuitries.

In some embodiments, one or more devices or circuitries within these hardware processing circuitries may be implemented by combinations of software-configured elements and/or other hardware elements. For example, processor 816 (and/or one or more other processors which eNB 810 may comprise), memory 818, and/or other elements or components of eNB 810 (which may include hardware processing circuitry 820) may be arranged to perform the operations of these hardware processing circuitries, such as operations described herein with reference to devices and circuitry within these hardware processing circuitries. In some embodiments, processor 816 (and/or one or more other processors which eNB 810 may comprise) may be a baseband processor.

Returning to **Fig. 9****,** an apparatus of eNB 810 (or another eNB or base station), which may be operable to communicate with one or more UEs on a wireless network, may comprise hardware processing circuitry 900. In some embodiments, hardware processing circuitry 900 may comprise one or more antenna ports 905 operable to provide various transmissions over a wireless communication channel (such as wireless communication channel 850). Antenna ports 905 may be coupled to one or more antennas 907 (which may be antennas 805). In some embodiments, hardware processing circuitry 900 may incorporate antennas 907, while in other embodiments, hardware processing circuitry 900 may merely be coupled to antennas 907.

Antenna ports 905 and antennas 907 may be operable to provide signals from an eNB to a wireless communications channel and/or a UE, and may be operable to provide signals from a UE and/or a wireless communications channel to an eNB. For example, antenna ports 905 and antennas 907 may be operable to provide transmissions from eNB 810 to wireless communication channel 850 (and from there to UE 830, or to another UE). Similarly, antennas 907 and antenna ports 905 may be operable to provide transmissions from a wireless communication channel 850 (and beyond that, from UE 830, or another UE) to eNB 810.

Hardware processing circuitry 900 may comprise various circuitries operable in accordance with the various embodiments discussed herein. With reference to **Fig. 9****,** hardware processing circuitry 900 may comprise a first circuitry 910, a second circuitry 920, and a third circuitry 930.

In some embodiments, first circuitry 910 may be operable to generate one or more parameters associated with a Discontinuous Reception (DRX) paging cycle of the UE, and store the one or more parameters in a memory of the hardware processing circuitry 900. Second circuitry 920 may be operable to generate a message for transmission to the UE such that the message comprises the one or more parameters associated with the DRX paging cycle of the UE. Third circuitry 930 may be operable to facilitate transmission of the message to the UE.

In some embodiments, hardware processing circuitry 900 may be coupled to a transceiver circuitry for at least one of: generating transmissions, scheduling transmissions, encoding transmissions, processing transmissions, or decoding transmissions.

In some embodiments, first circuitry 910, second circuitry 920, and/or third circuitry 930 may be implemented as separate circuitries. In other embodiments, first circuitry 910, second circuitry 920, and/or third circuitry 930 may be combined and implemented together in a circuitry without altering the essence of the embodiments.

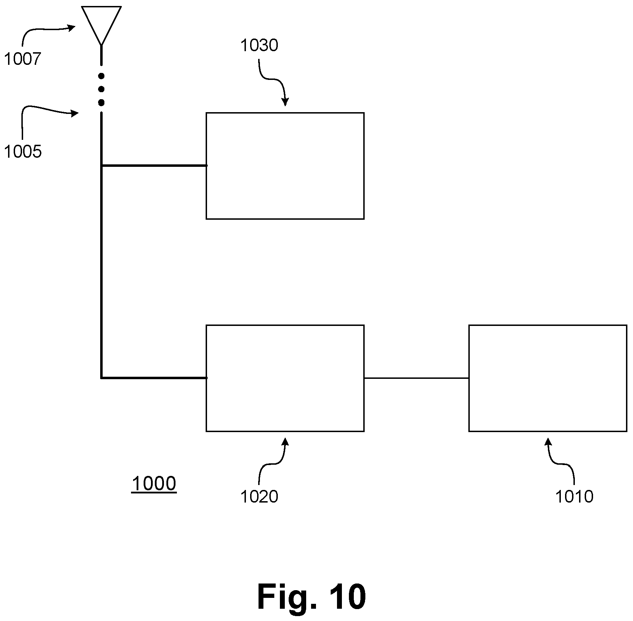

**Fig. 10** illustrates hardware processing circuitries for a UE for operating in a light connection state in accordance with RAN configured DRX parameters, according to some embodiments. With reference to **Fig. 8****,** a UE may include various hardware processing circuitries discussed below, which may in turn comprise logic devices and/or circuitry operable to perform various operations. For example, in **Fig. 8****,** UE 830 (or various elements or components therein, such as hardware processing circuitry 840, or combinations of elements or components therein) may include part of, or all of, these hardware processing circuitries.

In some embodiments, one or more devices or circuitries within these hardware processing circuitries may be implemented by combinations of software-configured elements and/or other hardware elements. For example, processor 836 (and/or one or more other processors which UE 830 may comprise), memory 838, and/or other elements or components of UE 830 (which may include hardware processing circuitry 840) may be arranged to perform the operations of these hardware processing circuitries, such as operations described herein with reference to devices and circuitry within these hardware processing circuitries. In some embodiments, processor 836 (and/or one or more other processors which UE 830 may comprise) may be a baseband processor.

Returning to **Fig. 10****,** an apparatus of UE 830 (or another UE or mobile handset), which may be operable to communicate with one or more eNBs on a wireless network, may comprise hardware processing circuitry 1000. In some embodiments, hardware processing circuitry 1000 may comprise one or more antenna ports 1005 operable to provide various transmissions over a wireless communication channel (such as wireless communication channel 850). Antenna ports 1005 may be coupled to one or more antennas 1007 (which may be antennas 825). In some embodiments, hardware processing circuitry 1000 may incorporate antennas 1007, while in other embodiments, hardware processing circuitry 1000 may merely be coupled to antennas 1007.

Antenna ports 1005 and antennas 1007 may be operable to provide signals from a UE to a wireless communications channel and/or an eNB, and may be operable to provide signals from an eNB and/or a wireless communications channel to a UE. For example, antenna ports 1005 and antennas 1007 may be operable to provide transmissions from UE 830 to wireless communication channel 850 (and from there to eNB 810, or to another eNB). Similarly, antennas 1007 and antenna ports 1005 may be operable to provide transmissions from a wireless communication channel 850 (and beyond that, from eNB 810, or another eNB) to UE 830.

Hardware processing circuitry 1000 may comprise various circuitries operable in accordance with the various embodiments discussed herein. With reference to **Fig. 10****,** hardware processing circuitry 1000 may comprise a first circuitry 1010, a second circuitry 1020, and/or a third circuitry 1030.

In some embodiments, first circuitry 1010 may be operable to access one or more parameters received from a eNB, wherein the one or more parameters are associated with a Discontinuous Reception (DRX) paging cycle of the UE. Second circuitry 1020 may be operable to operate the UE in a light connection state. Third circuitry 1030 may be operable to intermittently monitor, while in the light connection state, for paging messages in accordance with the one or more parameters.

In some embodiments, first circuitry 1010, second circuitry 1020, and/or third circuitry 1030 may be implemented as separate circuitries. In other embodiments, first circuitry 1010, second circuitry 1020, and third circuitry 1030 may be combined and implemented together in a circuitry without altering the essence of the embodiments.

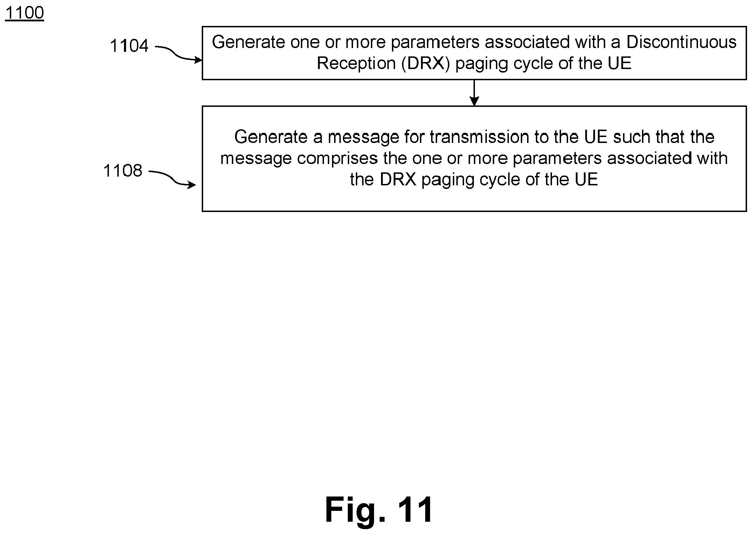

**Fig. 11** illustrates method 1100 for generating a message comprising RAN configured DRX parameters for light connection state of operation of an UE, according to some embodiments. The method 1100 may be performed by a eNB. Although the actions in the method of **Fig. 11** are shown in a particular order, the order of the actions can be modified. Thus, the illustrated embodiments can be performed in a different order, and some actions may be performed in parallel. Some of the actions and/or operations listed in **Fig. 11** are optional in accordance with certain embodiments. The numbering of the actions presented is for the sake of clarity and is not intended to prescribe an order of operations in which the various actions must occur. Additionally, operations from the various flows may be utilized in a variety of combinations.

Moreover, in some embodiments, machine readable storage media may have executable instructions that, when executed, cause an eNB (e.g., eNB 102) to perform an operation comprising the method of **Fig. 11****.** Such machine readable storage media may include any of a variety of storage media, like magnetic storage media (e.g., magnetic tapes or magnetic disks), optical storage media (e.g., optical discs), electronic storage media (e.g., conventional hard disk drives, solid-state disk drives, or flash-memory-based storage media), or any other tangible storage media or non-transitory storage media.

In some embodiments, an apparatus may comprise means for performing various actions and/or operations of the methods 1100 of **Fig. 11****.**

Returning to **Fig. 11****,** various methods may be in accordance with the various embodiments discussed herein. The method 1100 comprises, at 1104, generating (e.g., by a eNB) one or more parameters associated with a DRX paging cycle of a UE. In some embodiments, the one or more parameters may be stored (e.g., stored at least temporarily) in a memory of the eNB.

In some embodiments, the one or more parameters may be associated with the DRX paging cycle of the UE during a light connection state of the UE. In some embodiments, the one or more parameters may comprise a light connection indication to indicate whether the UE is to remain in the light connection state. In some embodiments, the one or more parameters may comprise a Ran Paging Cycle parameter. In some embodiments, the Ran Paging Cycle parameter may be usable to derive a DRX cycle length of the UE. In some embodiments, the one or more parameters may comprise a Paging Time Window (PTW) length for an extended DRX (eDRX) cycle. In some embodiments, the eNB may be a first eNB, wherein the one or more parameters may comprise a first one or more parameters, and the method 110 may further comprise (although not illustrated in **Fig. 11**) generating an inter-eNB paging message, the inter-eNB paging message comprising a second one or more parameters associated with an extended DRX (eDRX) cycle of the UE. In some embodiments, the inter-eNB paging message may be a X2APP (X2 Application Protocol) message.

At 1108, the method 1100 may further comprise generating a message for transmission to the UE such that the message comprises the one or more parameters associated with the DRX paging cycle of the UE. In some embodiments, the message may comprise a Radio Resource Control (RRC) connection reconfiguration message. In some embodiments, the message may comprise a Radio Resource Control (RRC) connection release message. In some embodiments, the message may comprise a Radio Resource Control (RRC) connection reject message. In some embodiments, the UE may be a first UE; and the message may comprise a broadcast message for transmission to a plurality of UEs, including the first UE. In some embodiments, the UE may be a first UE; and the message may comprise a System Information Block (SIB) for transmission to a plurality of UEs, including the first UE.

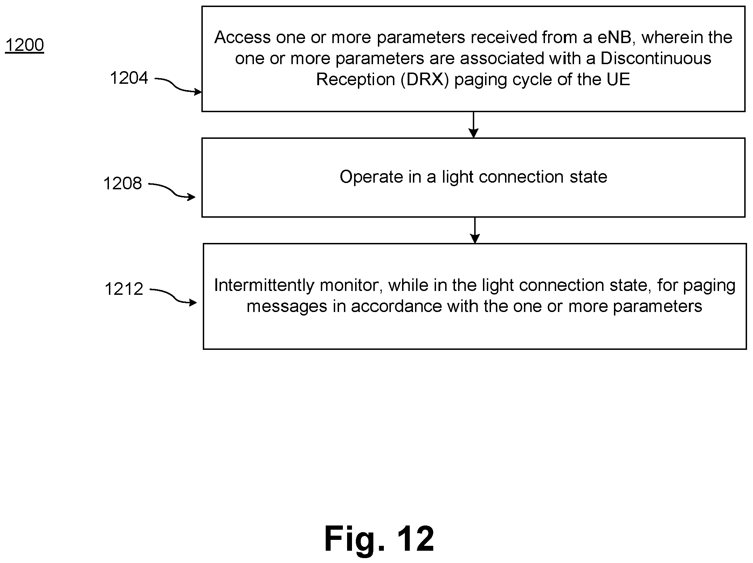

**Fig. 12** illustrates method 1200 for operating in a light connection state based on RAN configured DRX parameters, in accordance with some embodiments of the disclosure. The method 1200 may be performed by a UE. Although the actions in the method of **Fig. 12** are shown in a particular order, the order of the actions can be modified. Thus, the illustrated embodiments can be performed in a different order, and some actions may be performed in parallel. Some of the actions and/or operations listed in **Fig. 12** are optional in accordance with certain embodiments. The numbering of the actions presented is for the sake of clarity and is not intended to prescribe an order of operations in which the various actions must occur. Additionally, operations from the various flows may be utilized in a variety of combinations.

Moreover, in some embodiments, machine readable storage media may have executable instructions that, when executed, cause an UE (e.g., eNB 104) to perform an operation comprising the method of **Fig. 12****.** Such machine readable storage media may include any of a variety of storage media, like magnetic storage media (e.g., magnetic tapes or magnetic disks), optical storage media (e.g., optical discs), electronic storage media (e.g., conventional hard disk drives, solid-state disk drives, or flash-memory-based storage media), or any other tangible storage media or non-transitory storage media.

In some embodiments, an apparatus may comprise means for performing various actions and/or operations of the method 1200 of **Fig. 12****.**

Returning to **Fig. 12****,** various methods may be in accordance with the various embodiments discussed herein. The method 1200 may comprise, at 1204, accessing (e.g., by the UE 104) one or more parameters received from a eNB. For example, the UE may process a transmission from the eNB carrying the one or more parameters. In some embodiments, the UE may store the one or more parameters in a memory of the UE. In some embodiments, the one or more parameters may be associated with a DRX paging cycle (or a eDRX paging cycle) of the UE. In some embodiments, the one or more parameters may be configured by the eNB. In some embodiments, the one or more parameters may comprise a first value of a first parameter, the first value being configured by the eNB specifically for the UE; the UE may access a second value of the first parameter, the second value configured during an initial attachment process of the UE; and the UE may access a third value of the first parameter, the third value being a default value of the first parameter for a plurality of UEs. In some embodiments, the UE may compare the first value of the first parameter, the second value of the first parameter, and the third value of the first parameter; the UE may select one of the first, second, or third values of the first parameter; and the UE may intermittently monitor, while in the light connection state, for paging messages in accordance with the selected value of the first parameter. In some embodiments, the first parameter may be a Paging Time Window (PTW) length; and the UE may select one of the first, second, or third values having a longest duration. In some embodiments, the first parameter may be a paging cycle; and the UE may select one of the first, second, or third values having a shortest duration.

In some embodiments, the one or more parameters may be received from the eNB via a Radio Resource Control (RRC) connection reconfiguration message. In some embodiments, the one or more parameters may be received from the eNB via a Radio Resource Control (RRC) connection release message. In some embodiments, the one or more parameters may be received from the eNB via a Radio Resource Control (RRC) connection reject message. In some embodiments, the one or more parameters may be received from the eNB via a broadcast message. In some embodiments, the one or more parameters may be received from the eNB via a System Information Block (SIB) message or a SIB2 message. In some embodiments, the one or more parameters may comprise a light connection indication to indicate whether the UE is to remain in the light connection state. In some embodiments, the one or more parameters may comprise a Ran Paging Cycle parameter. In some embodiments, the Ran Paging Cycle parameter may be usable to derive a DRX cycle length of the UE. In some embodiments, the one or more parameters may comprise a Paging Time Window (PTW) length for an extended DRX (eDRX) cycle.

Referring again to **Fig. 12,** at 1208, the UE may operate in a light connection state. At 1212, the UE may intermittently monitor, while in the light connection state, for paging messages in accordance with the one or more parameters (which may be accessed at 1204).

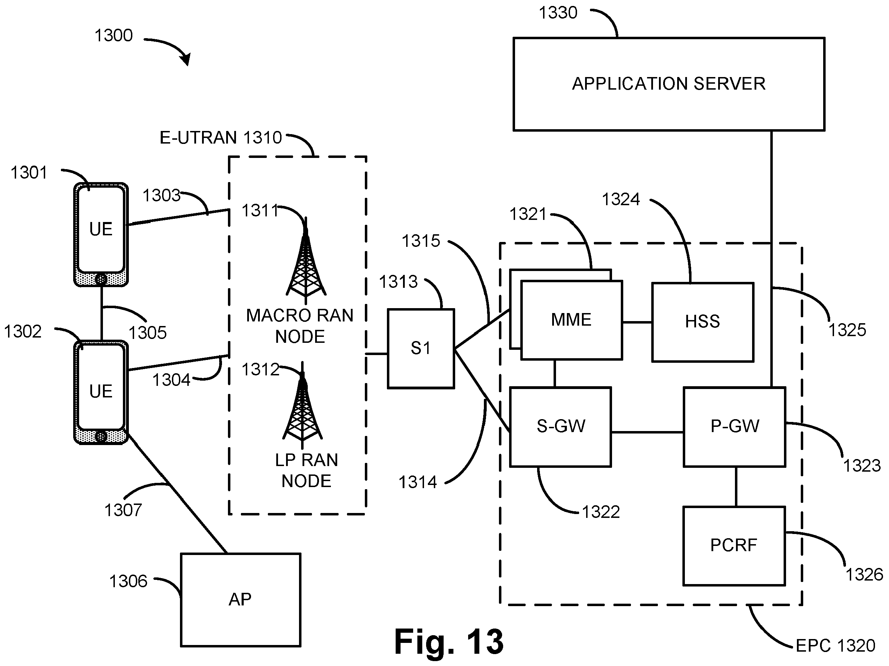

**Fig. 13** illustrates an architecture of a system 1300 of a network, according to some embodiments. The system 1300 is shown to include a user equipment (UE) 1301 and a UE 1302. The UEs 1301 and 1302 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 1301 and 1302 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 1301 and 1302 may be configured to connect, e.g., communicatively couple, with a radio access network (RAN) - in this embodiment, an Evolved Universal Mobile Telecommunications System (UMTS) Terrestrial Radio Access Network (E-UTRAN) 1310. The UEs 1301 and 1302 utilize connections 1303 and 1304, respectively, each of which comprises a physical communications interface or layer (discussed in further detail below); in this example, the connections 1303 and 1304 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 1301 and 1302 may further directly exchange communication data via a ProSe interface 1305. The ProSe interface 1305 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 1302 is shown to be configured to access an access point (AP) 1306 via connection 1307. The connection 1307 can comprise a local wireless connection, such as a connection consistent with any IEEE 802.11 protocol, wherein the AP 1306 would comprise a wireless fidelity (WiFi^{®}) router. In this example, the AP 1306 is shown to be connected to the Internet without connecting to the core network of the wireless system (described in further detail below).

The E-UTRAN 1310 can include one or more access nodes that enable the connections 1303 and 1304. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The E-UTRAN 1310 may include one or more RAN nodes for providing macrocells, e.g., macro RAN node 1311, and one or more RAN nodes for providing femtocells or picocells (e.g., cells having smaller coverage areas, smaller user capacity, or higher bandwidth compared to macrocells), e.g., low power (LP) RAN node 1312.

Any of the RAN nodes 1311 and 1312 can terminate the air interface protocol and can be the first point of contact for the UEs 1301 and 1302. In some embodiments, any of the RAN nodes 1311 and 1312 can fulfill various logical functions for the E-UTRAN 1310 including, but not limited to, radio network controller (RNC) functions such as radio bearer management, uplink and downlink dynamic radio resource management and data packet scheduling, and mobility management.

In accordance with some embodiments, the UEs 1301 and 1302 can be configured to communicate using Orthogonal Frequency-Division Multiplexing (OFDM) communication signals with each other or with any of the RAN nodes 1311 and 1312 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 1311 and 1312 to the UEs 1301 and 1302, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 1301 and 1302. The physical downlink control channel (PDCCH) may carry information about the transport format and resource allocations related to the PDSCH channel, among other things. It may also inform the UEs 1301 and 1302 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 1311 and 1312 based on channel quality information fed back from any of the UEs 1301 and 1302. The downlink resource assignment information may be sent on the PDCCH used for (e.g., assigned to) each of the UEs 1301 and 1302.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The E-UTRAN 1310 is shown to be communicatively coupled to a core network - in this embodiment, an Evolved Packet Core (EPC) network 1320 via an S1 interface 1313. In this embodiment the S1 interface 1313 is split into two parts: the S1-U interface 1314, which carries traffic data between the RAN nodes 1311 and 1312 and the serving gateway (S-GW) 1322, and the S1-mobility management entity (MME) interface 1315, which is a signaling interface between the RAN nodes 1311 and 1312 and MMEs 1321.

In this embodiment, the EPC network 1320 comprises the MMEs 1321, the S-GW 1322, the Packet Data Network (PDN) Gateway (P-GW) 1323, and a home subscriber server (HSS) 1324. The MMEs 1321 may be similar in function to the control plane of legacy Serving General Packet Radio Service (GPRS) Support Nodes (SGSN). The MMEs 1321 may manage mobility aspects in access such as gateway selection and tracking area list management. The HSS 1324 may comprise a database for network users, including subscription-related information to support the network entities' handling of communication sessions. The EPC network 1320 may comprise one or several HSSs 1324, depending on the number of mobile subscribers, on the capacity of the equipment, on the organization of the network, etc. For example, the HSS 1324 can provide support for routing/roaming, authentication, authorization, naming/addressing resolution, location dependencies, etc.

The S-GW 1322 may terminate the S1 interface 1313 towards the E-UTRAN 1310, and routes data packets between the E-UTRAN 1310 and the EPC network 1320. In addition, the S-GW 1322 may be a local mobility anchor point for inter-RAN node handovers and also may provide an anchor for inter-3GPP mobility. Other responsibilities may include lawful intercept, charging, and some policy enforcement.

The P-GW 1323 may terminate an SGi interface toward a PDN. The P-GW 1323 may route data packets between the EPC network 1320 and external networks such as a network including the application server 1330 (alternatively referred to as application function (AF)) via an Internet Protocol (IP) interface 1325. Generally, the application server 1330 may be an element offering applications that use IP bearer resources with the core network (e.g., UMTS Packet Services (PS) domain, LTE PS data services, etc.). In this embodiment, the P-GW 1323 is shown to be communicatively coupled to an application server 1330 via an IP communications interface 1325. The application server 1330 can also be configured to support one or more communication services (e.g., Voice-over-Internet Protocol (VoIP) sessions, PTT sessions, group communication sessions, social networking services, etc.) for the UEs 1301 and 1302 via the EPC network 1320.

The P-GW 1323 may further be a node for policy enforcement and charging data collection. Policy and Charging Enforcement Function (PCRF) 1326 is the policy and charging control element of the EPC network 1320. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 1326 may be communicatively coupled to the application server 1330 via the P-GW 1323. The application server 1330 may signal the PCRF 1326 to indicate a new service flow and select the appropriate Quality of Service (QoS) and charging parameters. The PCRF 1326 may provision this rule into a Policy and Charging Enforcement Function (PCEF) (not shown) with the appropriate traffic flow template (TFT) and QoS class of identifier (QCI), which commences the QoS and charging as specified by the application server 1330.

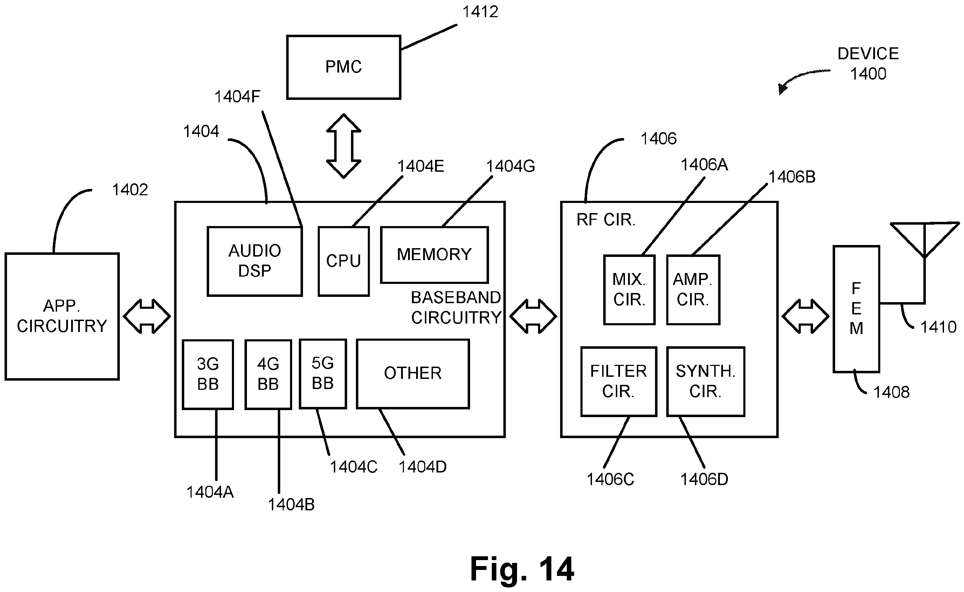

**Fig. 14** illustrates example components of a device 1400, according to some embodiments. In some embodiments, the device 1400 may include application circuitry 1402, baseband circuitry 1404, Radio Frequency (RF) circuitry 1406, front-end module (FEM) circuitry 1408, one or more antennas 1410, and power management circuitry (PMC) 1412 coupled together at least as shown. The components of the illustrated device 1400 may be included in a UE or a RAN node. In some embodiments, the device 1400 may include less elements (e.g., a RAN node may not utilize application circuitry 1402, and instead include a processor/controller to process IP data received from an EPC). In some embodiments, the device 1400 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 1402 may include one or more application processors. For example, the application circuitry 1402 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 1400. In some embodiments, processors of application circuitry 1402 may process IP data packets received from an EPC.

The baseband circuitry 1404 may include circuitry such as, but not limited to, one or more single-core or multi-core processors. The baseband circuitry 1404 may include one or more baseband processors or control logic to process baseband signals received from a receive signal path of the RF circuitry 1406 and to generate baseband signals for a transmit signal path of the RF circuitry 1406. Baseband processing circuity 1404 may interface with the application circuitry 1402 for generation and processing of the baseband signals and for controlling operations of the RF circuitry 1406. For example, in some embodiments, the baseband circuitry 1404 may include a third generation (3G) baseband processor 1404A, a fourth generation (4G) baseband processor 1404B, a fifth generation (5G) baseband processor 1404C, or other baseband processor(s) 1404D for other existing generations, generations in development or to be developed in the future (e.g., second generation (2G), sixth generation (6G), etc.). The baseband circuitry 1404 (e.g., one or more of baseband processors 1404A-D) may handle various radio control functions that enable communication with one or more radio networks via the RF circuitry 1406. In other embodiments, some or all of the functionality of baseband processors 1404A-D may be included in modules stored in the memory 1404G and executed via a Central Processing Unit (CPU) 1404E. The radio control functions may include, but are not limited to, signal modulation/demodulation, encoding/decoding, radio frequency shifting, etc. In some embodiments, modulation/demodulation circuitry of the baseband circuitry 1404 may include Fast-Fourier Transform (FFT), precoding, or constellation mapping/demapping functionality. In some embodiments, encoding/decoding circuitry of the baseband circuitry 1404 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1404 may include one or more audio digital signal processor(s) (DSP) 1404F. The audio DSP(s) 1404F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1404 and the application circuitry 1402 may be implemented together such as, for example, on a system on a chip (SOC).

In some embodiments, the baseband circuitry 1404 may provide for communication compatible with one or more radio technologies. For example, in some embodiments, the baseband circuitry 1404 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 1404 is configured to support radio communications of more than one wireless protocol may be referred to as multi-mode baseband circuitry.

RF circuitry 1406 may enable communication with wireless networks using modulated electromagnetic radiation through a non-solid medium. In various embodiments, the RF circuitry 1406 may include switches, filters, amplifiers, etc. to facilitate the communication with the wireless network. RF circuitry 1406 may include a receive signal path which may include circuitry to down-convert RF signals received from the FEM circuitry 1408 and provide baseband signals to the baseband circuitry 1404. RF circuitry 1406 may also include a transmit signal path which may include circuitry to up-convert baseband signals provided by the baseband circuitry 1404 and provide RF output signals to the FEM circuitry 1408 for transmission.

In some embodiments, the receive signal path of the RF circuitry 1406 may include mixer circuitry 1406a, amplifier circuitry 1406b and filter circuitry 1406c. In some embodiments, the transmit signal path of the RF circuitry 1406 may include filter circuitry 1406c and mixer circuitry 1406a. RF circuitry 1406 may also include synthesizer circuitry 1406d for synthesizing a frequency for use by the mixer circuitry 1406a of the receive signal path and the transmit signal path. In some embodiments, the mixer circuitry 1406a of the receive signal path may be configured to down-convert RF signals received from the FEM circuitry 1408 based on the synthesized frequency provided by synthesizer circuitry 1406d. The amplifier circuitry 1406b may be configured to amplify the down-converted signals and the filter circuitry 1406c may be a low-pass filter (LPF) or band-pass filter (BPF) configured to remove unwanted signals from the down-converted signals to generate output baseband signals. Output baseband signals may be provided to the baseband circuitry 1404 for further processing. In some embodiments, the output baseband signals may be zero-frequency baseband signals, although this is not a requirement. In some embodiments, mixer circuitry 1406a of the receive signal path may comprise passive mixers, although the scope of the embodiments is not limited in this respect.

In some embodiments, the mixer circuitry 1406a of the transmit signal path may be configured to up-convert input baseband signals based on the synthesized frequency provided by the synthesizer circuitry 1406d to generate RF output signals for the FEM circuitry 1408. The baseband signals may be provided by the baseband circuitry 1404 and may be filtered by filter circuitry 1406c.

In some embodiments, the mixer circuitry 1406a of the receive signal path and the mixer circuitry 1406a of the transmit signal path may include two or more mixers and may be arranged for quadrature downconversion and upconversion, respectively. In some embodiments, the mixer circuitry 1406a of the receive signal path and the mixer circuitry 1406a of the transmit signal path may include two or more mixers and may be arranged for image rejection (e.g., Hartley image rejection). In some embodiments, the mixer circuitry 1406a of the receive signal path and the mixer circuitry 1406a may be arranged for direct downconversion and direct upconversion, respectively. In some embodiments, the mixer circuitry 1406a of the receive signal path and the mixer circuitry 1406a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1406 may include analog-to-digital converter (ADC) and digital-to-analog converter (DAC) circuitry and the baseband circuitry 1404 may include a digital baseband interface to communicate with the RF circuitry 1406.

In some dual-mode embodiments, a separate radio IC circuitry may be provided for processing signals for each spectrum, although the scope of the embodiments is not limited in this respect.

In some embodiments, the synthesizer circuitry 1406d may be a fractional-N synthesizer or a fractional N/N+1 synthesizer, although the scope of the embodiments is not limited in this respect as other types of frequency synthesizers may be suitable. For example, synthesizer circuitry 1406d may be a delta-sigma synthesizer, a frequency multiplier, or a synthesizer comprising a phase-locked loop with a frequency divider.

The synthesizer circuitry 1406d may be configured to synthesize an output frequency for use by the mixer circuitry 1406a of the RF circuitry 1406 based on a frequency input and a divider control input. In some embodiments, the synthesizer circuitry 1406d may be a fractional N/N+1 synthesizer.

In some embodiments, frequency input may be provided by a voltage controlled oscillator (VCO), although that is not a requirement. Divider control input may be provided by either the baseband circuitry 1404 or the applications processor 1402 depending on the desired output frequency. In some embodiments, a divider control input (e.g., N) may be determined from a look-up table based on a channel indicated by the applications processor 1402.

Synthesizer circuitry 1406d of the RF circuitry 1406 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1406d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1406 may include an IQ/polar converter.

FEM circuitry 1408 may include a receive signal path which may include circuitry configured to operate on RF signals received from one or more antennas 1410, amplify the received signals and provide the amplified versions of the received signals to the RF circuitry 1406 for further processing. FEM circuitry 1408 may also include a transmit signal path which may include circuitry configured to amplify signals for transmission provided by the RF circuitry 1406 for transmission by one or more of the one or more antennas 1410. In various embodiments, the amplification through the transmit or receive signal paths may be done solely in the RF circuitry 1406, solely in the FEM 1408, or in both the RF circuitry 1406 and the FEM 1408.

In some embodiments, the FEM circuitry 1408 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 1406). The transmit signal path of the FEM circuitry 1408 may include a power amplifier (PA) to amplify input RF signals (e.g., provided by RF circuitry 1406), and one or more filters to generate RF signals for subsequent transmission (e.g., by one or more of the one or more antennas 1410).

In some embodiments, the PMC 1412 may manage power provided to the baseband circuitry 1404. In particular, the PMC 1412 may control power-source selection, voltage scaling, battery charging, or DC-to-DC conversion. The PMC 1412 may often be included when the device 1400 is capable of being powered by a battery, for example, when the device is included in a UE. The PMC 1412 may increase the power conversion efficiency while providing desirable implementation size and heat dissipation characteristics.

While **Fig. 14** shows the PMC 1412 coupled only with the baseband circuitry 1404. However, in other embodiments, the PMC 14 12 may be additionally or alternatively coupled with, and perform similar power management operations for, other components such as, but not limited to, application circuitry 1402, RF circuitry 1406, or FEM 1408.

In some embodiments, the PMC 1412 may control, or otherwise be part of, various power saving mechanisms of the device 1400. For example, if the device 1400 is in an RRC_Connected state, where it is still connected to the RAN node as it expects to receive traffic shortly, then it may enter a state known as Discontinuous Reception Mode (DRX) after a period of inactivity. During this state, the device 1400 may power down for brief intervals of time and thus save power.

If there is no data traffic activity for an extended period of time, then the device 1400 may transition off to an RRC_Idle state, where it disconnects from the network and does not perform operations such as channel quality feedback, handover, etc. The device 1400 goes into a very low power state and it performs paging where again it periodically wakes up to listen to the network and then powers down again. The device 1400 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 1402 and processors of the baseband circuitry 1404 may be used to execute elements of one or more instances of a protocol stack. For example, processors of the baseband circuitry 1404, alone or in combination, may be used execute Layer 3, Layer 2, or Layer 1 functionality, while processors of the application circuitry 1404 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

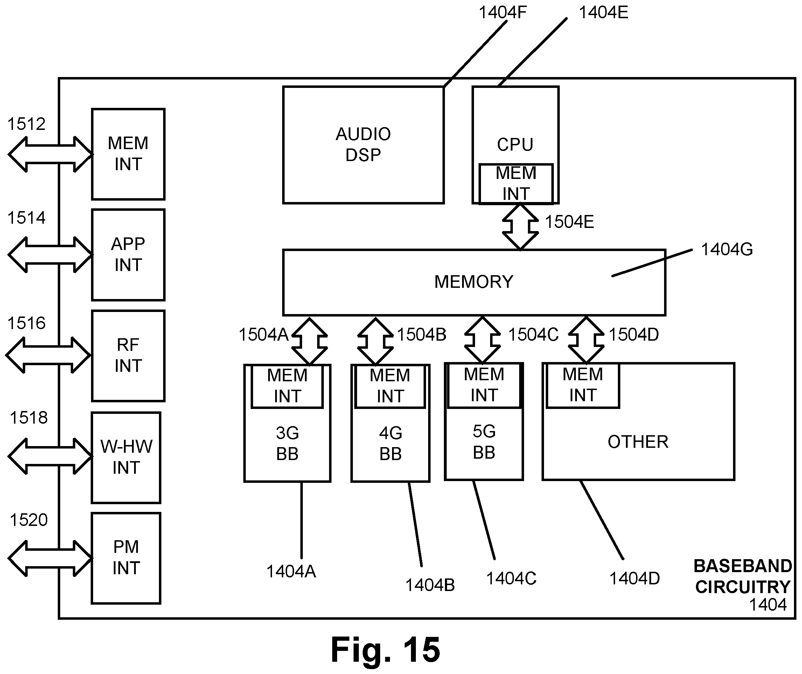

**Fig. 15** illustrates example interfaces of baseband circuitry, according to some embodiments. As discussed above, the baseband circuitry 1404 of Fig. 14 may comprise processors 1404A-1404E and a memory 1404G utilized by said processors. Each of the processors 1404A-1404E may include a memory interface, 1504A-1504E, respectively, to send/receive data to/from the memory 1404G.

The baseband circuitry 1404 may further include one or more interfaces to communicatively couple to other circuitries/devices, such as a memory interface 1512 (e.g., an interface to send/receive data to/from memory external to the baseband circuitry 1404), an application circuitry interface 1514 (e.g., an interface to send/receive data to/from the application circuitry 1402 of **Fig. 14**), an RF circuitry interface 1516 (e.g., an interface to send/receive data to/from RF circuitry 1406 of **Fig. 14**), a wireless hardware connectivity interface 1518 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 1520 (e.g., an interface to send/receive power or control signals to/from the PMC 1412.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of " an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional element.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. For example, other memory architectures e.g., Dynamic RAM (DRAM) may use the embodiments discussed. The embodiments of the disclosure are intended to embrace all such alternatives, modifications, and variations as to fall within the broad scope of the appended claims.

In addition, well known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

The following examples pertain to further embodiments. Specifics in the examples may be used anywhere in one or more embodiments. All optional features of the apparatus described herein may also be implemented with respect to a method or process.

Clause 1. An apparatus of an Evolved Node B (eNB) operable to communicate with a User Equipment (UE) on a wireless network, comprising: a memory; and one or more processors to: establish one or more parameters associated with a Discontinuous Reception (DRX) paging cycle of the UE; store the one or more parameters in the memory; and generate a message for transmission to the UE carrying the one or more parameters associated with the DRX paging cycle of the UE.

Clause 2. The apparatus of claim 1, wherein the message comprises a Radio Resource Control (RRC) connection reconfiguration message.

Clause 3. The apparatus of claim 1, wherein the message comprises a Radio Resource Control (RRC) connection release message.

Clause 4. The apparatus of claim 1, wherein the message comprises a Radio Resource Control (RRC) connection reject message.

Clause 5. The apparatus of claim 1, wherein: the UE is a first UE; and the message comprises a broadcast message for transmission to a plurality of UEs, including the first UE.

Clause 6. The apparatus of claim 1, wherein: the UE is a first UE; and the message comprises a System Information Block (SIB) for transmission to a plurality of UEs, including the first UE.

Clause 7. The apparatus of any of claims 1-6, wherein the one or more parameters are associated with the DRX paging cycle of the UE during a light connection state of the UE.

Clause 8. The apparatus of any of claims 1-6, wherein the one or more parameters comprises a light connection indication to indicate whether the UE is to remain in the light connection state.

Clause 9. The apparatus of any of claims 1-6, wherein the one or more parameters comprises a RAN (Radio Access Network) Paging Cycle parameter.

Clause 10. The apparatus of any of claims 1-6, wherein the RAN Paging Cycle parameter is for deriving a DRX cycle length of the UE.

Clause 11. The apparatus of any of claim 1-6, wherein the one or more parameters comprises a Paging Time Window (PTW) length for an extended DRX (eDRX) cycle.

Clause 12. The apparatus of any of claims 1-6, wherein the eNB is a first eNB, wherein the one or more parameters comprises one or more first parameters, and wherein the one or more processors are to: establish one or more second parameters associated with an extended DRX (eDRX) paging cycle of the UE; and generate an inter-eNB paging message for transmission to a second eNB, the inter-eNB paging message comprising the one or more second parameters associated with the eDRX cycle of the UE.

Clause 13. The apparatus of claim 12, wherein the inter-eNB paging message is an X2APP (X2 Application Protocol) message.

Clause 14. An Evolved Node B (eNB) device comprising an application processor, a memory, one or more antenna ports, and an interface for allowing the application processor to communicate with another device, the eNB device including the apparatus of any of claims 1-13.

Clause 15. The apparatus of any of claims 1-14, comprising a transceiver circuitry for generating transmissions and processing transmissions.

Clause 16. Machine readable storage media having machine executable instructions that, when executed, cause one or more processors of an Evolved Node B (eNB) to perform an operation comprising: establish one or more parameters associated with a Discontinuous Reception (DRX) paging cycle of the UE; and generate a message for transmission to the UE carrying the one or more parameters associated with the DRX paging cycle of the UE.

Clause 17. The machine readable storage media of claim 16, wherein the message comprises a Radio Resource Control (RRC) connection reconfiguration message.

Clause 18. The machine readable storage media of claim 16, wherein the message comprises a Radio Resource Control (RRC) connection release message.

Clause 19. The machine readable storage media of claim 16, wherein the message comprises a Radio Resource Control (RRC) connection reject message.

Clause 20. The machine readable storage media of claim 16, wherein: the UE is a first UE; and the message comprises a broadcast message for transmission to a plurality of UEs, including the first UE.

Clause 21. The machine readable storage media of claim 16, wherein: the UE is a first UE; and the message comprises a System Information Block (SIB) for transmission to a plurality of UEs, including the first UE.

Clause 22. The machine readable storage media of any of claims 16-21, wherein the one or more parameters are associated with the DRX paging cycle of the UE during a light connection state of the UE.

Clause 23. The machine readable storage media of any of claims 16-22, wherein the one or more parameters comprises a light connection indicator to indicate whether the UE is to remain in the light connection state.

Clause 24. The machine readable storage media of any of claims 16-23, wherein the one or more parameters comprises a RAN (Radio Access Network) Paging Cycle parameter.

Clause 25. The machine readable storage media of claim 24, wherein the RAN Paging Cycle parameter is for deriving a DRX cycle length of the UE.

Clause 26. The machine readable storage media of any of claims 16-25, wherein the one or more parameters comprises a Paging Time Window (PTW) length for an extended DRX (eDRX) cycle.

Clause 27. The machine readable storage media of any of claims 16-26, wherein the one or more parameters comprises one or more first parameters, wherein the eNB is a first eNB, and wherein the operation comprises: establish one or more second parameters associated with an extended DRX (eDRX) paging cycle of the UE; and generate an inter-eNB paging message for transmission to a second eNB, the inter-eNB paging message comprising the one or more second parameters associated with the eDRX cycle of the UE.

Clause 28. The machine readable storage media of claim 27, wherein the inter-eNB paging message is an X2APP (X2 Application Protocol) message.

Clause 29. An apparatus of a User Equipment (UE) operable to communicate with an Evolved Node B (eNB) on a wireless network, comprising: a memory to store instructions; and one or more processors to: process a transmission from the eNB carrying one or more parameters associated with a Discontinuous Reception (DRX) paging cycle of the UE; store the one or more parameters in the memory; maintain a light connection state of the UE; and monitor intermittently for receipt of a paging message in accordance with the one or more parameters while in the light connection state.

Clause 30. The apparatus of claim 29, wherein the one or more parameters are established by the eNB.

Clause 31. The apparatus of claim 29, wherein: the one or more parameters comprise a first parameter having a first value, the first value being established by the eNB specifically for the UE; the one or more processors are to process, during an initial attachment process of the UE, an additional transmission carrying a second value of the first parameter established by a core network; and the one or more processors are to process a broadcast transmission from the eNB carrying a third value of the first parameter, the third value being a default value of the first parameter for a plurality of UEs.

Clause 32. The apparatus of claim 31, wherein the one or more processors are to: compare the first value of the first parameter, the second value of the first parameter, and the third value of the first parameter; select a value among the first value, the second value, or the third value of the first parameter; and monitor intermittently for receipt of a paging message in accordance with the selected value of the first parameter while in the light connection state.

Clause 33. The apparatus of claim 32, wherein: the first parameter is a Paging Time Window (PTW) length; and the one or more processors are to select the value having a longest duration among the first value, the second value, and the third value.

Clause 34. The apparatus of claim 32, wherein: the first parameter is a paging cycle; and the one or more processors are to select the value having a shortest duration among the first value, the second value, and the third value.

Clause 35. The apparatus of any of claims 29-34, wherein: the transmission comprises a Radio Resource Control (RRC) connection reconfiguration message.

Clause 36. The apparatus of any of claims 29-34, wherein: the transmission comprises a Radio Resource Control (RRC) connection release message.

Clause 37. The apparatus of any of claims 29-34, wherein: the transmission comprises a Radio Resource Control (RRC) connection reject message.

Clause 38. The apparatus of any of claims 29-34, wherein: the transmission comprises a broadcast message.

Clause 39. The apparatus of any of claims 29-34, wherein: the transmission comprises a System Information Block (SIB)-2 (SIB2) message.

Clause 40. The apparatus of any of claims 29-34, wherein the one or more parameters comprise a light connection indication field to indicate whether the UE is to remain in the light connection state.

Clause 41. The apparatus of any of claims 29-34, wherein the one or more parameters comprises a RAN (Radio Access Network) Paging Cycle parameter.

Clause 42. The apparatus of claim 41, wherein the RAN Paging Cycle parameter is for deriving a DRX cycle length of the UE.

Clause 43. The apparatus of any of claim 29-34, wherein the one or more parameters comprises a Paging Time Window (PTW) length for an extended DRX (eDRX) cycle.

Clause 44. A User Equipment (UE) device comprising an application processor, a memory, one or more antennas, a wireless interface for allowing the application processor to communicate with another device, and a touch-screen display, the UE device including the apparatus of any of claims 29-43.

Clause 45. The apparatus of any of claims 29-43, comprising a transceiver circuitry for generating transmissions and processing transmissions.

Clause 46. Machine readable storage media having machine executable instructions that, when executed, cause one or more processors of a User Equipment (UE) to perform an operation comprising: process a transmission from the eNB carrying one or more parameters associated with a Discontinuous Reception (DRX) paging cycle of the UE; maintain a light connection state of the UE; and monitor intermittently for receipt of a paging message in accordance with the one or more parameters while in the light connection state.

Clause 47. The machine readable storage media of claim 46, wherein the one or more parameters are established by the eNB.

Clause 48. The machine readable storage media of claim 46, wherein: the one or more parameters comprise a first parameter having a first value, the first value being established by the eNB specifically for the UE; the operation comprises process, during an initial attachment process of the UE, an additional transmission carrying a second value of the first parameter established by a core network; and the operation comprises process a broadcast transmission from the eNB carrying a third value of the first parameter, the third value being a default value of the first parameter for a plurality of UEs.

Clause 49. The machine readable storage media of claim 48, wherein the operation comprises: compare the first value of the first parameter, the second value of the first parameter, and the third value of the first parameter; select a value among the first value, the second value, or the third value of the first parameter; and monitor intermittently for receipt of a paging message in accordance with the selected value of the first parameter while in the light connection state.

Clause 50. The machine readable storage media of claim 49, wherein: the first parameter is a Paging Time Window (PTW) length; and the operation comprises select the value having a longest duration among the first value, the second value, and the third value.

Clause 51. The machine readable storage media of claim 49, wherein: the first parameter is a paging cycle; and the operation comprises select the value having a shortest duration among the first value, the second value, and the third value.

Clause 52. The machine readable storage media of any of claims 46-51, wherein: the transmission comprises a Radio Resource Control (RRC) connection reconfiguration message.

Clause 53. The machine readable storage media of any of claims 46-51, wherein: the transmission comprises a Radio Resource Control (RRC) connection release message.

Clause 54. The machine readable storage media of any of claims 46-51, wherein: the transmission comprises a Radio Resource Control (RRC) connection reject message.

Clause 55. The machine readable storage media of any of claims 46-51, wherein: the transmission comprises a broadcast message.

Clause 56. The machine readable storage media of any of claims 46-51, wherein: the transmission comprises a System Information Block (SIB)-2 message (SIB2 message).

Clause 57. The machine readable storage media of any of claims 46-51, wherein the one or more parameters comprises a light connection indication field to indicate whether the UE is to remain in the light connection state.

Clause 58. The machine readable storage media of any of claims 46-51, wherein the one or more parameters comprises a RAN (Radio Access Network) Paging Cycle parameter.

Clause 59. The machine readable storage media of claim 58, wherein the RAN Paging Cycle parameter is for deriving a DRX cycle length of the UE

Clause 60. The machine readable storage media of any of claim 46-51, wherein the one or more parameters comprises a Paging Time Window (PTW) length for an extended DRX (eDRX) cycle.

Clause 61. A method comprising: establishing, by an Evolved Node B (eNB), one or more parameters associated with a Discontinuous Reception (DRX) paging cycle of the UE; and generating a message for transmission to the UE carrying the one or more parameters associated with the DRX paging cycle of the UE.

Clause 62. The method of claim 61, wherein the message comprises a Radio Resource Control (RRC) connection reconfiguration message.

Clause 63. The method of claim 61, wherein the message comprises a Radio Resource Control (RRC) connection release message.

Clause 64. The method of claim 61, wherein the message comprises a Radio Resource Control (RRC) connection reject message.

Clause 65. The method of claim 61, wherein: the UE is a first UE; and the message comprises a System Information Block (SIB) for transmission to a plurality of UEs, including the first UE.

Clause 66. The method of any of claims 61-65, wherein the one or more parameters are associated with the DRX paging cycle of the UE during a light connection state of the UE.

Clause 67. The method of any of claims 61-65, wherein the one or more parameters comprises a light connection indicator to indicate whether the UE is to remain in the light connection state.

Clause 68. The method of any of claims 61-65, wherein the one or more parameters comprises a RAN (Radio Access Network) Paging Cycle parameter.

An abstract is provided that will allow the reader to ascertain the nature and gist of the technical disclosure. The abstract is submitted with the understanding that it will not be used to limit the scope or meaning of the claims. The following claims are hereby incorporated into the detailed description, with each claim standing on its own as a separate embodiment.

### FURTHER EMBODIMENTS

1. An apparatus of an Evolved Node B (eNB) operable to communicate with a User Equipment (UE) on a wireless network, comprising:
   a memory; and
   one or more processors to:
      establish one or more parameters associated with a Discontinuous Reception (DRX) paging cycle of the UE;
      store the one or more parameters in the memory; and
      generate a message for transmission to the UE carrying the one or more parameters associated with the DRX paging cycle of the UE.
2. The apparatus of embodiment 1, wherein the message comprises a Radio Resource Control (RRC) connection reconfiguration message.
3. The apparatus of embodiment 1, wherein the message comprises a Radio Resource Control (RRC) connection release message.
4. The apparatus of embodiment 1, wherein the message comprises a Radio Resource Control (RRC) connection reject message.
5. The apparatus of embodiment 1, wherein:
   the UE is a first UE; and
   the message comprises a broadcast message for transmission to a plurality of UEs, including the first UE.
6. The apparatus of embodiment 1, wherein:
   the UE is a first UE; and
   the message comprises a System Information Block (SIB) for transmission to a plurality of UEs, including the first UE.
7. The apparatus of any of embodiments 1 -6, wherein the one or more parameters are associated with the DRX paging cycle of the UE during a light connection state of the UE.
8. The apparatus of any of embodiments 1 -6, wherein the one or more parameters comprises a light connection indication to indicate whether the UE is to remain in the light connection state.
9. The apparatus of any of embodiments 1 -6, wherein the one or more parameters comprises a RAN (Radio Access Network) Paging Cycle parameter.
10. The apparatus of any of embodiments 1 -6, wherein the RAN Paging Cycle parameter is for deriving a DRX cycle length of the UE.
11. The apparatus of any of embodiment 1 -6, wherein the one or more parameters comprises a Paging Time Window (PTW) length for an extended DRX (eDRX) cycle.
12. The apparatus of any of embodiments 1 -6, wherein the eNB is a first eNB, wherein the one or more parameters comprises one or more first parameters, and wherein the one or more processors are to:
   establish one or more second parameters associated with an extended DRX (eDRX) paging cycle of the UE; and
   generate an inter-eNB paging message for transmission to a second eNB, the inter-eNB paging message comprising the one or more second parameters associated with the eDRX cycle of the UE.
13. The apparatus of embodiment 12, wherein the inter-eNB paging message is an X₂APP (X2 Application Protocol) message.
14. Machine readable storage media having machine executable instructions that, when executed, cause one or more processors of an Evolved Node B (eNB) to perform an operation comprising:
   establish one or more parameters associated with a Discontinuous Reception (DRX) paging cycle of the UE; and
   generate a message for transmission to the UE carrying the one or more parameters associated with the DRX paging cycle of the UE.
15. The machine readable storage media of embodiment 14, wherein the message comprises a Radio Resource Control (RRC) connection reconfiguration message.
16. The machine readable storage media of embodiment 14, wherein the message comprises a Radio Resource Control (RRC) connection release message.
17. The machine readable storage media of embodiment 14, wherein the message comprises a Radio Resource Control (RRC) connection reject message.
18. The machine readable storage media of embodiment 14, wherein:
   the UE is a first UE; and
   the message comprises a System Information Block (SIB) for transmission to a plurality of UEs, including the first UE.
19. The machine readable storage media of any of embodiments 14-18, wherein the one or more parameters are associated with the DRX paging cycle of the UE during a light connection state of the UE.
20. The machine readable storage media of any of embodiments 14-18, wherein the one or more parameters comprises a light connection indicator to indicate whether the UE is to remain in the light connection state.
21. The machine readable storage media of any of embodiments 14-18, wherein the one or more parameters comprises a RAN (Radio Access Network) Paging Cycle parameter.
22. An apparatus of a User Equipment (UE) operable to communicate with an Evolved Node B (eNB) on a wireless network, comprising:
   a memory to store instructions; and
   one or more processors to:
      process a transmission from the eNB carrying one or more parameters associated with a Discontinuous Reception (DRX) paging cycle of the UE;
      store the one or more parameters in the memory;
      maintain a light connection state of the UE; and
      monitor intermittently for receipt of a paging message in accordance with the one or more parameters while in the light connection state.
23. The apparatus of embodiment 22, wherein the one or more parameters are established by the eNB.
24. The apparatus of any of embodiments 22-23, wherein:
   the one or more parameters comprise a first parameter having a first value, the first value being established by the eNB specifically for the UE;
   the one or more processors are to process, during an initial attachment process of the UE, an additional transmission carrying a second value of the first parameter established by a core network; and
   the one or more processors are to process a broadcast transmission from the eNB carrying a third value of the first parameter, the third value being a default value of the first parameter for a plurality of UEs.
25. The apparatus of embodiment 24, wherein the one or more processors are to:
   compare the first value of the first parameter, the second value of the first parameter, and the third value of the first parameter;
   select a value among the first value, the second value, or the third value of the first parameter; and
   monitor intermittently for receipt of a paging message in accordance with the selected value of the first parameter while in the light connection state.

## Claims

1. An Evolved Node B, eNB (810), operable to communicate with a User Equipment, UE (830), on a wireless network, comprising:
a memory (816); and
one or more processors (816) to:
determine (1104) one or more parameters associated with a Discontinuous Reception, DRX, paging cycle of the UE (830), wherein the one or more parameters are associated with the DRX paging cycle of the UE (830) during an RRC light connection state of the UE (830), and wherein the one or more parameters comprise a paging cycle parameter that indicates a paging interval and a paging area info parameter during the RRC light connection state of the UE (830);
generate (1108) a message for transmission to the UE (830) carrying the one or more parameters associated with the DRX paging cycle of the UE (830); and
transmit the generated message to the UE.

2. The eNB of claim 1, wherein the message comprises a Radio Resource Control, RRC, connection release message.

3. The eNB of claim 1, wherein:
the UE (830) is a first UE; and
the message comprises a broadcast message for transmission to a plurality of UEs, including the first UE.

4. The eNB of claim 1, wherein:
the UE (830) is a first UE; and
the message comprises a System Information Block, SIB, for transmission to a plurality of UEs, including the first UE.

5. The eNB of any of claims 1-4, wherein the paging cycle parameter within the one or more parameters comprises a Radio Access Network, RAN, Paging Cycle parameter, Ran-PagingCycle.

6. The eNB of any of claims 1-4, wherein the eNB (810) is a first eNB, wherein the one or more parameters comprises one or more first parameters, and wherein the one or more processors are to:
determine one or more second parameters associated with an extended DRX, eDRX, paging cycle of the UE (830); and
generate an inter-eNB paging message for transmission to a second eNB, the inter-eNB paging message comprising the one or more second parameters associated with the eDRX cycle of the UE (830),
wherein the inter-eNB paging message is an X2APP, X2 Application Protocol, message.

7. Machine readable storage media having machine executable instructions that, when executed, cause one or more processors (816) of an Evolved Node B, eNB (810), to perform an operation comprising:
determining (1104) one or more parameters associated with a Discontinuous Reception, DRX, paging cycle of a UE (830), wherein the one or more parameters are associated with the DRX paging cycle of the UE (830) during an RRC light connection state of the UE (830), and the one or more parameters comprises a paging cycle parameter that indicates a paging interval and a paging area info parameter; and
generating (1108) a message for transmission to the UE (830) carrying the one or more parameters associated with the DRX paging cycle of the UE (830).

8. The machine readable storage media of claim 7, wherein the message comprises a RRC connection release message for transmission to a plurality of UEs.

9. A User Equipment, UE (830), operable to communicate with an Evolved Node B, eNB (810), on a wireless network, comprising:
a memory (838) to store instructions; and
one or more processors (836) to:
receive and process a transmission from the eNB (810) carrying one or more parameters associated with a Discontinuous Reception, DRX, paging cycle of the UE (830), wherein the one or more parameters are associated with the DRX paging cycle of the UE (830) during an RRC light connection state of the UE (830), and wherein the one or more parameters comprise a paging cycle parameter that indicates a paging interval and a paging area info parameter during the RRC light connection state of the UE (830);
maintain the RRC light connection state of the UE (830) based on the processed transmission; and
monitor intermittently for receipt of a paging message in accordance with the one or more parameters while in the RRC light connection state.

10. The UE of claim 9, wherein:
the one or more parameters comprise a first parameter having a first value, the first value being established by the eNB (810) for the UE (830); and
the one or more processors (836) are to:
process, during an initial attachment process of the UE (830), an additional transmission carrying a second value of the first parameter established by a core network,
process a broadcast transmission from the eNB (810) carrying a third value of the first parameter, the third value being a default value of the first parameter for a plurality of UEs,
compare the first value of the first parameter, the second value of the first parameter, and the third value of the first parameter,
select a value among the first value, the second value, or the third value of the first parameter, based on the comparison of the first value, the second value, and the third value of the first parameter, and
monitor intermittently for receipt of a paging message in accordance with the selected value of the first parameter while in the RRC light connection state.
